# EUROPEAN PATENT APPLICATION

(11) **EP 4 806 745 A1**
(43) Date of publication of application: **16.09.2026**
(21) Application number: 24888055.1
(22) Date of filing: 07.11.2024
(51) Int. Cl.: B60W 30/06

(54) **PARKING METHOD, METHOD FOR LEAVING PARKING SPACE, PROCESSING DEVICE, VEHICLE, AND STORAGE MEDIUM**

(30) Priority: 08.11.2023 CN 202311481635
(71) Applicant: BYD Company Limited, Shenzhen, Guangdong 518118 (CN)
(72) Inventor: YANG, Dongsheng, Shenzhen, Guangdong 518118 (CN); WANG, Xinbo, Shenzhen, Guangdong 518118 (CN); LIU, Jiangtao, Shenzhen, Guangdong 518118 (CN); ZHANG, Yu, Shenzhen, Guangdong 518118 (CN); TU, Xiaoxiao, Shenzhen, Guangdong 518118 (CN)
(74) Representative: Mathys & Squire
(86) International application number: PCT/CN2024/130539
(87) International publication number: WO 2025/098444

(57) **Abstract**

Provided are a parking method, a method for leaving a parking space, a processing device, a vehicle, and a storage medium. The parking method comprises: acquiring information of the current pose point of a vehicle, position information of a first parking space, and surrounding environmental information of the first parking space; on the basis of the information of the current pose point of the vehicle, the position information of the first parking space, and the surrounding environmental information of the first parking space, determining a target parking path of the vehicle; and on the basis of the target parking path, controlling the vehicle to park.

## Description

### CROSS-REFERENCE TO RELATED APPLICATIONS

The present disclosure claims priority to Chinese Patent Application No. 202311481635.3 filed on November 8, 2023 and entitled "PARKING METHOD AND RELATED DEVICE", which is incorporated herein by reference in its entirety.

### FIELD

The present disclosure relates to the field of vehicle control technologies, and in particular, to a parking method, a method for leaving a parking space, a processing device, a vehicle, and a storage medium.

### BACKGROUND

With the advancement of industrial technology and the improvement of people's living standards, automobiles, as a means of transportation, play an increasingly important role in people's daily lives, and consumer demand for automobiles is also growing.

With the advent of the era of intelligent driving, more and more consumers are beginning to consider using smart cars. Automatic parking assistance is a technical method that solves the problem of parking a vehicle into a space. During the parking process, the movement of traditional vehicles is subject to kinematic constraints and non-holonomic dynamic constraints, preventing the vehicle from slipping during travel. For example, the vehicle cannot achieve instantaneous lateral movement; front-wheel-drive vehicles must rely on steering of the front wheels to perform operations such as lane changing and turning; and the speed cannot be too fast on curves.

However, travel paths that satisfy kinematic and non-holonomic dynamic constraints often require relatively large spaces. When a user uses intelligent driving, if the space is too narrow to meet the aforementioned requirements, it is usually impossible to pre-plan a conventional travel path for the vehicle, resulting in automatic parking failure. This leads to poor user experience with automatic parking and low efficiency of automatic parking.

### SUMMARY

Embodiments of the present disclosure provide a parking method, a method for leaving a parking space, a processing device, a vehicle, and a storage medium, which can better achieve parking in narrow environments, such as parking in dead-end road scenarios or narrow passage scenarios. The parking path is divided into three stages: a pre-entry path, a rotation path, and an entry path, which can effectively improve the efficiency of automatic parking, thereby enhancing user experience.

In a first aspect, an embodiment of the present disclosure provides a parking method; the method is configured to control a vehicle to park. The vehicle includes a plurality of wheels and a plurality of motors. Each wheel of the plurality of wheels is controlled by one motor of the plurality of motors. The method includes:
information of a current pose point of the vehicle, position information of a first parking space, and surrounding environment information of the first parking space are acquired;
on the basis of the information of the current pose point of the vehicle, the position information of the first parking space, and the surrounding environment information of the first parking space, a target parking path of the vehicle is determined, wherein the target parking path includes a conventional traveling path and a rotation path, the conventional traveling path includes at least one of a straight-line traveling path or a curved traveling path, the rotation path is a path formed by the vehicle rotating around a first rotation center of the vehicle, the rotation of the vehicle is realized by the plurality of motors respectively controlling the plurality of wheels, and the first rotation center is located within a rotatable area formed by connecting centers of the plurality of wheels; and
the vehicle is controlled to park on the basis of the target parking path.

The solution in the embodiment of the present disclosure can be applied to a vehicle with four-wheel independent steering, using four-wheel independent steering motors, where all four wheels of the vehicle can be independently controlled. On the basis of supporting conventional traveling paths, it can realize a rotation path where the vehicle rotates around a certain rotation center of the vehicle (for example, around a single wheel), thereby breaking the traditional non-holonomic kinematic constraints of the vehicle. This enables the vehicle to travel effectively at a turning radius smaller than the minimum turning radius, or even on discontinuous paths, greatly improving the flexibility, passability, and mobility of the vehicle. It can better cope with narrow parking environments, such as dead-end road scenarios or narrow passage scenarios.

Moreover, compared to some automatic parking path methods, the present disclosure combines various planning methods such as conventional path planning, four-motor in-situ rotation, and rotation around a single wheel of the vehicle, dividing the parking path planning into three stages: pre-entry planning, rotation path planning, and entry planning, which can effectively improve the efficiency of automatic parking, thereby enhancing user experience.

In a possible implementation of the first aspect, a turning radius of the vehicle corresponding to the curved traveling path is greater than or equal to a minimum turning radius of the vehicle, a turning radius of the vehicle corresponding to the rotation path is less than the minimum turning radius of the vehicle, and the minimum turning radius is a turning radius of the vehicle when steering control is performed with a maximum front wheel steering angle and the plurality of wheels rotating in the same direction.

In another possible implementation of the first aspect, the surrounding environmental information of the first parking space is configured to indicate information of obstacles around the first parking space, and the rotation path satisfies: no obstacles are located within a range of the rotation path.

In another possible implementation of the first aspect, the parking method further includes:
on the basis of the information of the obstacles around the first parking space, a parkable space of the vehicle is determined; and
on the basis of the parkable space for the vehicle, a size of the vehicle, and the information of the current pose point of the vehicle, the first rotation center is determined.

In another possible implementation of the first aspect, the parking method further includes:
on the basis of the parkable space for the vehicle and the size of the vehicle, a position range of an end point of the rotation path is determined, wherein the end point of the rotation path is a pose point at which a rear axle center of the vehicle is located after rotation;
on the basis of a rotation radius of the rotation path and the position range of the end point of the rotation path, a position range of a starting point of the rotation path is determined, wherein the rotation radius of the rotation path is related to the first rotation center and the size of the vehicle, and the starting point of the rotation path is a pose point at which the rear axle center of the vehicle is located before rotation;
on the basis of the position range of the starting point of the rotation path and the information of the current pose point of the vehicle, a first conventional traveling path is determined, wherein the first conventional traveling path is a path formed from the current pose point of the vehicle to the starting point of the rotation path, and the current pose point of the vehicle is a pose point at which the rear axle center of the vehicle is currently located; and
the rotation path and a second conventional traveling path are determined, wherein the rotation path is a path formed by the vehicle rotating from the starting point to the end point around the first rotation center with the rotation radius, and the second conventional traveling path is a path formed from the end point of the rotation path to a target pose point, and the target pose point is a pose point at which the rear axle center of the vehicle is located after the vehicle parks into the first parking space.

In another possible implementation of the first aspect, determining the first conventional traveling path on the basis of the position range of the starting point of the rotation path and the information of the current pose point of the vehicle includes:
on the basis of the position range of the starting point of the rotation path, a position of the current pose point of the vehicle, kinematic constraints, and non-holonomic dynamic constraints, a plurality of conventional traveling paths are determined; and
a conventional traveling path with a minimum cost among the plurality of conventional traveling paths is determined as the first conventional traveling path.

In another possible implementation of the first aspect, the information of the current pose point of the vehicle includes a traveling direction of the vehicle, and the parking method further includes:
in response to the traveling direction of the vehicle being that the front of the vehicle enters the parkable space first, on the basis of the parkable space for the vehicle and the size of the vehicle, the first rotation center is determined as a first front wheel of the vehicle; or
in response to the traveling direction of the vehicle being that the rear of the vehicle enters the parkable space first, on the basis of the parkable space for the vehicle and the size of the vehicle, the first rotation center is determined as a first rear wheel of the vehicle.

In another possible implementation of the first aspect, the first rotation center is a right front wheel of the vehicle;

The target parking path includes a first pre-entry path, a first rotation path, and a first entry path;
the first pre-entry path includes a third conventional traveling path, the third conventional traveling path is a path formed from the current pose point to a first entry preparation pose point, the first entry preparation pose point is a pose point at which the rear axle center of the vehicle is located before rotation;
the first rotation path is a path formed by the vehicle rotating around the right front wheel of the vehicle with a first rotation radius at the first entry preparation pose point, the first rotation radius is related to a wheelbase of the vehicle and a width of the vehicle; and
the first entry path includes a fourth conventional traveling path, the fourth conventional traveling path is a path formed from a second entry preparation pose point to the target pose point, the second entry preparation pose point is a pose point at which the rear axle center of the vehicle is located after rotation.

In this way, for a parking scenario where the front of the vehicle enters a dead-end road, the processing device can perform planning using the order from inside to outside the parking space, and finally reverse the planning result to acquire the final target parking path. By dividing the target parking path planning into three stages: external space planning, in-situ turning point planning, and entry planning, and using different algorithms and vehicle motion models for trajectory planning, which can effectively improve the efficiency of automatic parking, thereby enhancing user experience.

In another possible implementation of the first aspect, the first rotation center is a right rear wheel of the vehicle;
the target parking path includes a second pre-entry path, a second rotation path, and a second entry path;
the second pre-entry path includes a fifth conventional traveling path, the fifth conventional traveling path is a path formed from the current pose point to a third entry preparation pose point, the third entry preparation pose point is a pose point at which the rear axle center of the vehicle is located before rotation;
the second rotation path is a path formed by the vehicle rotating around the right rear wheel of the vehicle with a second rotation radius at the third entry preparation pose point, the second rotation radius is related to the width of the vehicle; and
the second entry path includes a sixth conventional traveling path, the sixth conventional traveling path is a path formed from a fourth entry preparation pose point to the target pose point, the fourth entry preparation pose point is a pose point at which the rear axle center of the vehicle is located after rotation.

In this way, for a parking scenario where the rear of the vehicle enters a dead-end road or for a narrow passage parking scenario, the processing device can perform planning using the order from inside to outside the parking space, and finally reverse the planning result to acquire the final target parking path. By dividing the target parking path planning into three stages: external space planning, in-situ turning point planning, and entry planning, and using different algorithms and vehicle motion models for trajectory planning, which can effectively improve the efficiency of automatic parking, thereby enhancing user experience.

In another possible implementation of the first aspect, the parking method further includes:
on the basis of the size of the vehicle, at least one rotatable space is determined in the parkable space;
for each rotatable space in the at least one rotatable space, a rotation position and the first rotation center of the vehicle at the rotation position are determined, and a rotation path formed by the vehicle rotating around the first rotation center at the rotation position respectively at each rotation position is determined;
on the basis of the information of the current pose point of the vehicle and a rotation position among the plurality of rotation positions that is closest to the current pose point, the first conventional traveling path is planned;
on the basis of a position of the first parking space and a rotation position among the plurality of rotation positions that is closest to the position of the first parking space, the second conventional traveling path is planned; and
the conventional traveling path between the plurality of rotation positions is planned.

In another possible implementation of the first aspect, the parking method further includes:
on the basis of the position information of the first parking space and the surrounding environment information of the first parking space, whether a parking scenario of the first parking space belongs to a space-limited scenario is determined, wherein the space-limited scenario is a scenario where a space size is relatively small and movement of the vehicle is restricted.

In another possible implementation of the first aspect, determining the target parking path of the vehicle on the basis of the information of the current pose point of the vehicle, the position information of the first parking space, and the surrounding environment information of the first parking space includes: if the parking scenario belongs to the space-limited scenario, on the basis of the information of the current pose point of the vehicle, the position information of the first parking space, and the surrounding environment information of the first parking space, the target parking path of the vehicle corresponding to the space-limited scenario is determined.

The above provides a method for planning a parking path. In such an embodiment, the vehicle can sense its environment and the environment near the parking space, determine a space where rotation can be performed, then flexibly determine one or more rotation positions in the rotatable space according to requirements, and flexibly determine the first rotation center at each rotation position on the basis of the surrounding environment, thereby completing the entry planning. Since rotating the vehicle around the first rotation center can flexibly and conveniently adjust an attitude angle of the vehicle, this embodiment, when a rotatable space exists, will plan a parking path that includes a rotation path as much as possible, and can even perform multiple rotations. Parking can also be performed under difficult conditions such as narrow roads and dead-end roads, significantly improving the success rate of planning parking paths and the efficiency of automatic parking.

In a second aspect, an embodiment of the present disclosure provides a method for leaving a parking space. The method is configured to control a vehicle to leave the parking space. The vehicle includes a plurality of wheels and a plurality of motors. Each wheel of the plurality of wheels is controlled by one motor of the plurality of motors. The method includes:
information of a current pose point of the vehicle, departure position information, and surrounding environment information of a first parking space are acquired.
on the basis of the information of the current pose point of the vehicle, the departure position information, and the surrounding environmental information of the first parking space, a target departure path of the vehicle is determined, wherein the target departure path includes a conventional traveling path and a rotation path, the conventional traveling path includes at least one of a straight-line traveling path or a curved traveling path, the rotation path is a path formed by the vehicle rotating around a first rotation center of the vehicle, the rotation of the vehicle is realized by the plurality of motors respectively controlling the plurality of wheels, and the first rotation center is located within a rotatable area formed by connecting centers of the plurality of wheels; and
on the basis of the target departure path, the vehicle is controlled to leave the first parking space.

In a possible implementation of the second aspect, a turning radius of the vehicle corresponding to the curved traveling path is greater than or equal to a minimum turning radius of the vehicle, a turning radius of the vehicle corresponding to the rotation path is less than the minimum turning radius of the vehicle, and the minimum turning radius is a turning radius of the vehicle when steering control is performed with a maximum front wheel steering angle and the plurality of wheels rotating in the same direction.

In a possible implementation of the second aspect, the surrounding environmental information of the first parking space is configured to indicate information of obstacles around the first parking space; the rotation path satisfies: no obstacles are located within the range of the rotation path; and the method for leaving the parking space further includes:
on the basis of the information of the obstacles around the first parking space, a parkable space of the vehicle is determined;
on the basis of a size of the vehicle, at least one rotatable space is determined in the parkable space;
one or more rotation positions in the at least one rotatable space and the first rotation center of the vehicle at the one or more rotation positions are determined, and a rotation path formed by the vehicle rotating around the first rotation center at the one or more rotation positions respectively at the one or more rotation positions is determined;
on the basis of the information of the current pose point of the vehicle and a rotation position among the one or more rotation positions that is closest to the current pose point, a seventh conventional traveling path is planned;
on the basis of the departure position information and a rotation position among the one or more rotation positions that is closest to a departure position, an eighth conventional traveling path is planned; and
in response to the rotation positions being plural, the conventional traveling path between the plurality of rotation positions is planned.

In a third aspect, an embodiment of the present disclosure provides a processing device. The processing device is disposed on a vehicle. The vehicle includes a plurality of wheels and a plurality of motors. Each wheel of the plurality of wheels is controlled by one motor of the plurality of motors. The processing device includes an acquisition unit and a processing unit.

The acquisition unit is configured to acquire information of a current pose point of the vehicle, position information of a first parking space, and surrounding environment information of the first parking space.

The processing unit is configured to:
on the basis of the information of the current pose point of the vehicle, the position information of the first parking space, and the surrounding environmental information of the first parking space, determine a target parking path of the vehicle, wherein the target parking path includes a conventional traveling path and a rotation path, the conventional traveling path includes at least one of a straight-line traveling path or a curved traveling path, the rotation path is a path formed by the vehicle rotating around a first rotation center of the vehicle, the rotation of the vehicle is realized by the plurality of motors respectively controlling the plurality of wheels, and the first rotation center is located within a rotatable area formed by connecting centers of the plurality of wheels; and
on the basis of the target parking path, control the vehicle to park.

In a possible implementation of the third aspect, a turning radius of the vehicle corresponding to the curved traveling path is greater than or equal to a minimum turning radius of the vehicle, a turning radius of the vehicle corresponding to the rotation path is less than the minimum turning radius of the vehicle, and the minimum turning radius is a turning radius of the vehicle when steering control is performed with a maximum front wheel steering angle and the plurality of wheels rotating in the same direction.

In another possible implementation of the third aspect, the surrounding environment information of the first parking space is configured to indicate information of obstacles around the first parking space, and the rotation path satisfies that no obstacles are located within the range of the rotation path.

In another possible implementation of the third aspect, the processing unit is further configured to:
on the basis of the information of the obstacles around the first parking space, determine a parkable space of the vehicle; and
on the basis of the parkable space of the vehicle, a size of the vehicle, and the information of the current pose point of the vehicle, determine the first rotation center.

In another possible implementation of the third aspect, the processing unit is further configured to:
on the basis of the parkable space of the vehicle and the size of the vehicle, determine a position range of an end point of the rotation path, wherein the end point of the rotation path is a pose point at which a rear axle center of the vehicle is located after rotation;
on the basis of a rotation radius of the rotation path and the position range of the end point of the rotation path, determine a position range of a starting point of the rotation path, wherein the rotation radius of the rotation path is related to the first rotation center and the size of the vehicle, and the starting point of the rotation path is a pose point at which the rear axle center of the vehicle is located before rotation;
on the basis of the position range of the starting point of the rotation path and the information of the current pose point of the vehicle, determine a first conventional traveling path, wherein the first conventional traveling path is a path formed from the current pose point of the vehicle to the starting point of the rotation path, and the current pose point of the vehicle is a pose point at which the rear axle center of the vehicle is currently located; and
determine the rotation path and a second conventional traveling path, wherein the rotation path is a path formed by the vehicle rotating from the starting point to the end point around the first rotation center with the rotation radius, and the second conventional traveling path is a path formed from the end point of the rotation path to a target pose point, and the target pose point is a pose point at which the rear axle center of the vehicle is located after the vehicle parks into the first parking space.

In another possible implementation of the third aspect, the processing unit is further configured to:
on the basis of the position range of the starting point of the rotation path, a position of the current pose point of the vehicle, kinematic constraints, and non-holonomic dynamic constraints, determine a plurality of conventional traveling paths; and
determine a conventional traveling path with a minimum cost among the plurality of conventional traveling paths as the first conventional traveling path.

In another possible implementation of the third aspect, the processing unit is further configured to:
in response to a traveling direction of the vehicle being that the front of the vehicle enters the parkable space first, on the basis of the parkable space for the vehicle and the size of the vehicle, determine the first rotation center as a first front wheel of the vehicle; or
in response to the traveling direction of the vehicle being that the rear of the vehicle enters the parkable space first, on the basis of the parkable space for the vehicle and the size of the vehicle, determine the first rotation center as a first rear wheel of the vehicle.

In another possible implementation of the third aspect, the first rotation center is a right front wheel of the vehicle;
the target parking path includes a first pre-entry path, a first rotation path, and a first entry path;
the first pre-entry path includes a third conventional traveling path, the third conventional traveling path is a path formed from the current pose point to a first entry preparation pose point, the first entry preparation pose point is a pose point at which the rear axle center of the vehicle is located before rotation,
the first rotation path is a path formed by the vehicle rotating around the right front wheel of the vehicle with a first rotation radius at the first entry preparation pose point, the first rotation radius is related to a wheelbase of the vehicle and a width of the vehicle; and
the first entry path includes a fourth conventional traveling path, the fourth conventional traveling path is a path formed from a second entry preparation pose point to the target pose point, the second entry preparation pose point is a pose point at which the rear axle center of the vehicle is located after rotation .

In another possible implementation of the third aspect, the first rotation center is a right rear wheel of the vehicle;
the target parking path includes a second pre-entry path, a second rotation path, and a second entry path;
the second pre-entry path includes a fifth conventional traveling path, the fifth conventional traveling path is a path formed from the current pose point to a third entry preparation pose point, the third entry preparation pose point is a pose point at which the rear axle center of the vehicle is located before rotation,
the second rotation path is a path formed by the vehicle rotating around the right rear wheel of the vehicle with a second rotation radius at the third entry preparation pose point, the second rotation radius is related to the width of the vehicle; and
the second entry path includes a sixth conventional traveling path, the sixth conventional traveling path is a path formed from a fourth entry preparation pose point to the target pose point, the fourth entry preparation pose point is a pose point at which the rear axle center of the vehicle is located after rotation.

In another possible implementation of the third aspect, the processing unit is further configure to:
on the basis of the size of the vehicle, determine at least one rotatable space in the parkable space;
for each rotatable space in the at least one rotatable space, determine a rotation position and the first rotation center of the vehicle at the rotation position, and determine a rotation path formed by the vehicle rotating around the first rotation center at the rotation position respectively at each rotation position;
on the basis of the information of the current pose point of the vehicle and a rotation position among the plurality of rotation positions that is closest to the current pose point, plan the first conventional traveling path;
on the basis of a position of the first parking space and a rotation position among the plurality of rotation positions that is closest to the position of the first parking space, plan a second conventional traveling path; and
plan the conventional traveling path between the plurality of rotation positions.

In a fourth aspect, an embodiment of the present disclosure provides a processing device. The processing device includes a processor and a memory. The processor performs instructions stored in the memory, thereby enabling the processing device to implement the method described in any of the embodiments of the first aspect.

In some embodiments, the processing device further includes a communication interface. The communication interface is configured to receive and/or transmit data, and/or the communication interface is configured to provide input and/or output for the processor.

It will be noted that the above embodiment is described by taking a processor (or a general-purpose processor) that performs the method by calling computer instructions as an example. In a specific implementation process, the processor may also be a dedicated processor, in which case computer instructions have been pre-loaded in the processor. Optionally, the processor may also include both a dedicated processor and a general-purpose processor.

In some embodiments, the processor and the memory may also be integrated into one device, that is, the processor and the memory may also be integrated together.

In a fifth aspect, the present disclosure provides a vehicle. The vehicle includes a plurality of wheels, a plurality of motors, and the aforementioned processing device. Each wheel of the plurality of wheels is controlled by one motor of the plurality of motors. The processing device is electrically coupled to the plurality of motors. The processing device is configured to implement the method described in any one of the embodiments of the first aspect.

In a sixth aspect, an embodiment of the present disclosure provides a computer-readable storage medium. The computer-readable storage medium stores instructions. When the instructions are executed by a processing device, the processing device is caused to implement the method described in any one of the embodiments of the first aspect.

In a seventh aspect, the present disclosure provides a computer program product. The computer program product includes computer instructions. When the instructions are executed by a processing device, the processing device is caused to implement the method described in any one of the embodiments of the first aspect.

In some embodiments, the computer program product may be a software installation package or an image file. When the aforementioned method needs to be used, the computer program product may be acquired and executed on a computing device.

For the beneficial effects of the technical solutions provided in the second to seventh aspects of the present application, reference may be made to the beneficial effects of the technical solutions in the first aspect, which are not repeated here.

### BRIEF DESCRIPTION OF THE DRAWINGS

### Brief descriptions of the accompanying drawings are provided below.

FIG. 1 is a schematic architectural diagram of a vehicle provided by an embodiment of the present disclosure.
FIG. 2 is a schematic diagram of a conventional traveling path provided by an embodiment of the present disclosure.
FIG. 3 is a schematic diagram of a rotatable area provided by an embodiment of the present disclosure.
FIG. 4 is a schematic flowchart of a parking method provided by an embodiment of the present disclosure.
FIG. 5 is a schematic diagram of a possible parking lot provided by an embodiment of the present disclosure.
FIG. 6 is a schematic diagram of a possible first rotation path provided by an embodiment of the present disclosure.
FIG. 7 is a schematic diagram of a possible vehicle provided by an embodiment of the present disclosure.
FIG. 8 is a schematic diagram of a possible target parking path provided by an embodiment of the present disclosure.
FIG. 9 is a schematic diagram of a possible target parking path provided by another embodiment of the present disclosure.
FIG. 10 is a schematic diagram of a possible second rotation path provided by an embodiment of the present disclosure.
FIG. 11 is a schematic flowchart of a parking method provided by another embodiment of the present disclosure.
FIG. 12 is a schematic structural diagram of a processing device provided by an embodiment of the present disclosure.
FIG. 13 is a schematic structural diagram of a processing device provided by another embodiment of the present disclosure.
FIG. 14 is a schematic structural diagram of a vehicle provided by an embodiment of the present disclosure.

### DETAILED DESCRIPTION

The embodiments of the present disclosure are described in detail below with reference to the accompanying drawings.

The following introduces the system architecture applied in the embodiments of the present disclosure. It will be noted that the system architecture and service scenarios described in the present disclosure are for more clearly illustrating the technical solutions of the present disclosure and do not constitute a limitation to the technical solutions provided in the present disclosure. Those of ordinary skill in the art will understand that as the system architecture evolves and new service scenarios emerge, the technical solutions provided in the present disclosure are also applicable to similar technical problems.

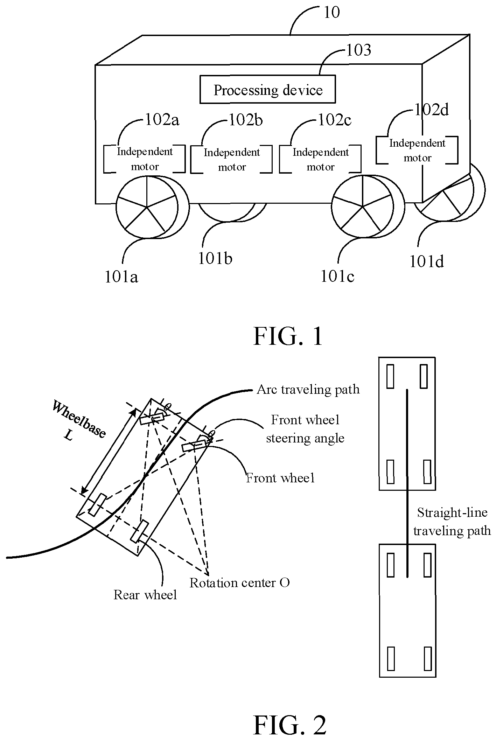

Reference is made to FIG. 1. FIG. 1 is a schematic architectural diagram of a vehicle provided by an embodiment of the present disclosure. As shown in FIG. 1, the vehicle 10 includes a plurality of wheels, a plurality of independent motors, and a processing device 103.

The vehicle 10 is exemplarily provided as an apparatus with traveling capability in the present disclosure. For example, the vehicle 10 includes, but is not limited to, different types of vehicles such as cars, trucks, buses, vans, and electric vehicles.

The wheels are used for supporting and driving the vehicle and may include wheel rims and tires. As shown in FIG. 1, the vehicle may include a wheel 101a, a wheel 101b, a wheel 101c, and a wheel 101d. The number of wheels is merely illustrative. In a specific implementation process, the number of wheels included in the vehicle may be larger or smaller.

The independent motor is used for controlling the steering of the wheel. In the vehicle 10, each wheel can be controlled by one independent motor, enabling the vehicle 10 to achieve various motion modes such as opposite-direction steering of front and rear wheels, in-situ rotation, and same-direction steering of front and rear wheels. In some embodiments, one independent motor may control one or more wheels. As shown in FIG. 1, the vehicle may include an independent motor 102a, an independent motor 102b, an independent motor 102c, and an independent motor 102d. The number of independent motors is merely illustrative. In a specific implementation process, the number of independent motors included in the vehicle may be larger or smaller.

The processing device 103 is a module with data processing capability. As one possible implementation, the processing device 103 may be a physical device. For example, the processing device 103 may include one or more of the following modules: a central processing unit (CPU), a microprocessor unit (MPU), an application specific integrated circuit (ASIC), a field programmable gate array (FPGA), a complex programmable logic device (CPLD), a coprocessor (assisting the central processing unit in completing corresponding processing and applications), a microcontroller unit (MCU), a mobile data center (MDC), and/or an electronic control unit (ECU), etc. Of course, the above description takes the processing device 103 being an onboard device as an example.

In some embodiments, the processing device 103 may be a physical device located outside the vehicle, such as a server, a cloud platform, or a host. As one possible implementation, the processing device 103 may be a software module, such as a virtual machine, software, program code, or a container.

As mentioned in the foregoing embodiments, the processing device 103 may be located outside the vehicle. It will be understood that when the processing device 103 is located outside the vehicle 10, the vehicle 10 and the processing device 103 may be communicatively connected. For example, the vehicle 10 and the processing device 103 are indirectly connected via a wireless communication method, such as ultra-wideband (UWB) technology, Long Term Evolution (LTE) communication technology, fifth-generation mobile networks or fifth-generation wireless systems (5G or 5G technology), Global System for Mobile Communications (GSM), General Packet Radio Service (GPRS), or Universal Mobile Telecommunications System (UMTS).

The following describes the scenarios involved in the embodiments of the present disclosure.

In some scenarios, the motion of a vehicle is subject to kinematic constraints and non-holonomic dynamic constraints, which prevent the vehicle from slipping during travel. For example, it cannot achieve instantaneous lateral movement; a front-wheel-drive vehicle must rely on the steering of the front wheels to perform operations such as lane changing and turning; and its speed cannot be too high on curves, etc. Paths satisfying these constraints must meet the following requirements:
(1) path continuity constraint: the position and curvature of the travel trajectory must be able to transition continuously to the original travel trajectory at the start and end positions.
(2) kinematic constraint: the vehicle has a minimum turning radius, so the curvature radius at any point of the travel trajectory must be greater than or equal to the minimum turning radius.
(3) non-holonomic dynamic constraint: to prevent the vehicle from sideslipping or rollover, constraints are imposed on lateral acceleration, yaw rate, and lateral jerk.

The above requirements mean that the vehicle can only travel on conventional traveling paths, which conform to kinematic and non-holonomic dynamic constraints. Reference is made to FIG. 2. FIG. 2 is a schematic diagram of a conventional traveling path provided by an embodiment of the present disclosure. As shown in FIG. 2, a conventional traveling path may include an arc traveling path and a straight-line traveling path. In some embodiments, the conventional traveling path may also include a combination of straight-line and arc traveling paths, high-order continuous smooth curve traveling paths, etc. However, the turning radius corresponding to a traveling path meeting the aforementioned requirements is often relatively large, thus requiring a large space. When performing automatic parking in a narrow space, extensive back-and-forth maneuvering (the process of positioning the vehicle centrally in the parking space without collision through forward and/or backward movements) is required, and sometimes parking cannot even be completed, resulting in low automatic parking efficiency. Moreover, traveling paths satisfying the above requirements typically require the vehicle to move along straight lines or curves, but moving along such paths in a narrow space often wastes a lot of space, increasing the difficulty of parking. Furthermore, due to the narrow space, frequent starts, stops, and gear shifts are needed, often causing a jerky feeling for the user and a long overall time consumption, leading to poor user experience and low efficiency of automatic parking. When a user performs manual parking, if the space is too narrow to meet the above requirements, the user often needs to repeatedly maneuver back and forth to constantly adjust the vehicle's direction to complete parking into the space. During the parking process, the limited space greatly increases the risk of collision, resulting in low parking safety and low user parking efficiency.

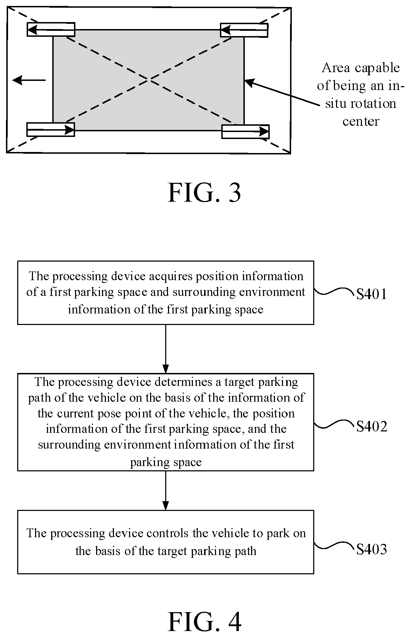

In view of this, the present disclosure is applied to a vehicle with four-wheel independent steering, employing four-wheel independent steering motors. All four wheels of the vehicle can be independently controlled. On the basis of supporting conventional traveling paths, it enables the vehicle to rotate around a single wheel of the vehicle, a first rotation center, etc. Reference is made to FIG. 3. FIG. 3 is a schematic diagram of a rotatable area provided by an embodiment of the present disclosure. As shown in FIG. 3, the first rotation center can be any point within the rotatable area, thereby breaking the traditional non-holonomic kinematic constraints of the vehicle. This allows the vehicle to travel effectively at a turning radius smaller than the minimum turning radius, or even on discontinuous paths, greatly improving the vehicle's flexibility, trafficability, and mobility. It can better cope with narrow parking environments, such as dead-end road scenarios (i.e., a specific small area where roads are not connected to other established road networks, making vehicles on such roads unable to access other traffic routes) and narrow passage scenarios. Moreover, compared to some automatic parking path methods, the present disclosure adopts a combination of multiple planning methods, including conventional path planning, four-motor in-situ rotation, and rotation around a single wheel of the vehicle, dividing the parking path planning into three stages: pre-entry planning, rotation path planning, and entry planning, which can effectively improve the efficiency of automatic parking and enhance user experience.

The following provides a detailed introduction to the method of the embodiments of the present disclosure.

Reference is made to FIG. 4. FIG. 4 is a schematic flowchart of a parking method provided by an embodiment of the present disclosure. In some embodiments, the method may be configured to control a vehicle to park and may be applied to a processing device. For example, the method may be applied to the processing device 103 shown in FIG. 1.

The parking method shown in FIG. 4 may include a plurality of operations among operations S401 to S403. It will be understood that the description in the order of operations S401 to S403 is for convenience of description in the present disclosure and is not intended to limit the execution to necessarily follow this order. The embodiments of the present disclosure do not limit the execution sequence, execution time, or execution count of the one or more operations mentioned above. Operations S401 to S403 are specifically as follows.

S401: the processing device acquires position information of a first parking space and surrounding environment information of the first parking space.

For example, the processing device also acquires information of a current pose point of the vehicle. The processing device is an apparatus having data processing capability and communication capability. It may be located inside the vehicle, or it may be a processing module integrated into the vehicle, such as an MDC or MCU. It may also be located outside the vehicle, such as a server, a cloud platform, or a host, or it may be a virtual device, such as a virtual machine, software, program code, or a container. The vehicle may be a vehicle equipped with a plurality of wheels and a plurality of independent motors. Each wheel may be controlled by one independent motor. Each motor can control the rotation direction, speed and torque of a wheel. Each motor may be connected to a central processing unit via an electronic control unit and may control the wheel on the basis of instructions from the central processing unit, enabling the vehicle to achieve various motion modes such as opposite-direction steering of front and rear wheels, in-situ rotation, and same-direction steering of front and rear wheels. In some embodiments, one independent motor may control one or more wheels. For example, the vehicle includes, but is not limited to, different types of vehicles such as cars, trucks, buses, vans, and electric vehicles.

In one possible implementation, the processing device may acquire position information of parking spaces in a parking lot and surrounding environmental information of the parking spaces in the parking lot. The surrounding environmental information of the parking spaces in the parking lot is configured to indicate obstacle information around the parking spaces in the parking lot. For example, the surrounding environment information of the parking spaces in the parking lot may indicate how many parking spaces the parking lot contains, whether each parking space is occupied by a vehicle, what obstacles (e.g., stone pillars, wooden stakes, walls, etc.) exist in the parking lot, and position information of these obstacles in the parking lot.

In some embodiments, the processing device may include a plurality of sensors. These sensors are configured to detect environment information around the vehicle, such as obstacle information around the vehicle. The processing device may adjust the rotation direction and speed of each wheel, etc., on the basis of signals from these sensors to ensure that the vehicle can safely avoid obstacles and dynamically adjust the parking trajectory. By controlling the speed and direction of the four-wheel independent motors, the processing device enables the vehicle to perform in-situ rotation around any point within a rectangular area enclosed by the centers of the four wheels. As shown in FIG. 3, the first rotation center can be any point within the rotatable area. In some embodiments, the parking spaces in the parking lot include the first parking space, and the surrounding environment information of the parking spaces in the parking lot includes the surrounding environment information of the first parking space. The first parking space is a parkable space in the parking lot. The position information of the first parking space and the position information of obstacles in the parking lot may be represented in forms such as a point, a line, or a bounding box, and a layout map of the parking spaces and obstacles in the parking lot may be constructed by means such as establishing a coordinate system. The surrounding environment information of the first parking space is configured to indicate information of obstacles around the first parking space.

In some embodiments, the processing device includes a visual sensor and an ultrasonic sensor. The visual sensor and the ultrasonic sensor are configured to perceive environmental information around the vehicle and identify surrounding obstacle information. The position information of the first parking space and the position information of obstacles in the parking lot may be represented in forms such as a point, a line, or a bounding box, and a layout map of the parking spaces and obstacles in the parking lot may be constructed by means such as establishing a coordinate system. In some embodiments, the processing device may perform calculation and analysis on the identified perception information to acquire parkable space information and space status of the parking lot, filter out the identified usable parking spaces, and display them on an interface of an onboard device for user selection.

Furthermore, the processing device determines whether the target parking space (the first parking space) belongs to a space-limited scenario (a space-limited scenario includes, but is not limited to, a dead-end road scenario or a narrow passage scenario). In some embodiments, the processing device extracts an available parking boundary on the basis of boundary information such as walls and pillars around the first parking space, and further acquires a drivable area for parking by combining obstacles with the first parking space. On the basis of the above information, whether the target parking space (the first parking space) belongs to the space-limited scenario is determined. If the target parking space is not a space-limited scenario, i.e., the processing device can plan a conventional traveling path for parking. If the target parking space is a space-limited scenario, then the processing device needs to plan a parking path combining a conventional traveling path and a rotation path for parking.

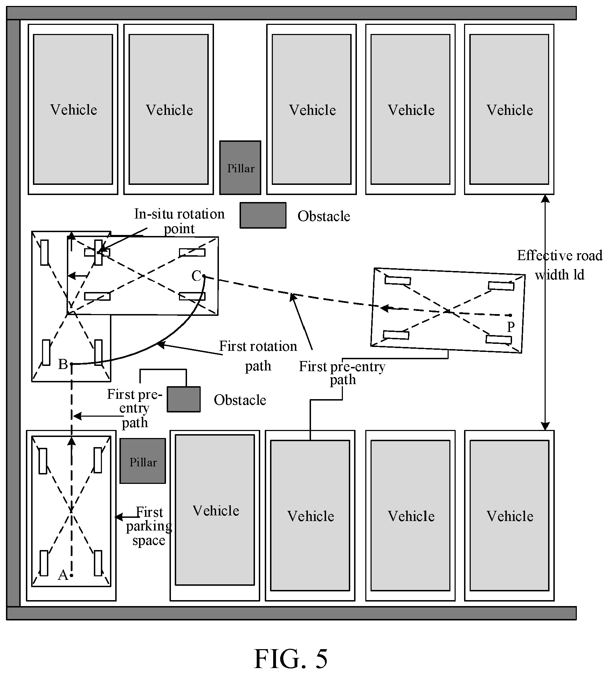

For example, reference is made to FIG. 5. FIG. 5 is a schematic diagram of a possible parking lot provided by an embodiment of the present disclosure. As shown in FIG. 5, the parking lot includes the first parking space. If a user selects the first parking space, then the first parking space is the target parking space for the vehicle. The parking lot also includes two obstacles. The processing device may acquire in advance the position information of the first parking space in the parking lot. The position information of the first parking space includes position information of a target pose point. The position information of the first parking space may be represented by a Cartesian coordinate system. For example, the Cartesian coordinate system is established with the target pose point as the origin. The target pose point is a pose point at which the rear axle center of the vehicle is located after the vehicle parks into the first parking space. In FIG. 5, the target pose point is point A. The position information of point A may be represented as (*x*₀, *y*₀), or may be represented as (0,0).

S402: the processing device determines a target parking path of the vehicle on the basis of the information of the current pose point of the vehicle, the position information of the first parking space, and the surrounding environment information of the first parking space.

The target parking path includes a conventional traveling path and a rotation path. The conventional traveling path conforms to kinematic constraints and non-holonomic dynamic constraints and includes at least one of a straight-line traveling path or a curved traveling path. The rotation path is a path formed by the vehicle rotating around a first rotation center of the vehicle. The rotation of the vehicle is realized by a plurality of motors respectively controlling a plurality of wheels. A turning radius of the vehicle corresponding to the curved traveling path is greater than or equal to a minimum turning radius of the vehicle, while a turning radius of the vehicle corresponding to the rotation path is less than the minimum turning radius of the vehicle. The minimum turning radius is a turning radius of the vehicle when steering control is performed with a maximum front wheel steering angle and the plurality of wheels (e.g., four wheels) rotating in the same direction. The first rotation center is located within a rotatable area formed by connecting centers of the plurality of wheels. Each rotation path satisfies that no obstacles are located within the range of the rotation path. As shown in FIG. 3, the first rotation center can be any point within the rotatable area.

In some embodiments, the target parking path includes a pre-entry path, a rotation path, and an entry path. The pre-entry path is a path from the current pose point of the vehicle to an entry preparation pose point. The rotation path is a path formed by the vehicle rotating around a certain wheel of the vehicle at the entry preparation pose point. The entry path is a path from the entry preparation pose point to the target pose point.

In one possible implementation, the processing device may determine the target parking path of the vehicle on the basis of current pose information of the vehicle, the position information of the first parking space, and the surrounding environmental information of the first parking space. The current pose information of the vehicle includes information of the current pose point of the vehicle, which is configured to indicate the current pose point of the vehicle. The surrounding environmental information of the first parking space is configured to indicate information of obstacles around the first parking space.

In one possible implementation, determining the target parking path of the vehicle includes:
the processing device determines the parkable space of the vehicle on the basis of the information of the obstacles around the first parking space;
the processing device determines the first rotation center on the basis of the parkable space for the vehicle, a size of the vehicle, and the information of the current pose point of the vehicle, wherein the current pose point is a pose point at which a rear axle center of the vehicle is currently located;
the processing device determines a position range of an end point of the rotation path on the basis of the parkable space for the vehicle and the size of the vehicle, wherein the end point of the rotation path is a pose point at which the rear axle center of the vehicle is located after rotation;
the processing device determines a position range of a starting point of the rotation path on the basis of a rotation radius of the rotation path and the position range of the end point of the rotation path, wherein the rotation radius of the rotation path is related to the first rotation center and the size of the vehicle, and the starting point of the rotation path is a pose point at which the rear axle center of the vehicle is located before rotation;
the processing device determines a first conventional traveling path on the basis of the position range of the starting point of the rotation path and the information of the current pose point of the vehicle;
the processing device determines the rotation path on the basis of the first rotation center, the rotation radius of the rotation path, and the position range of the starting point of the rotation path; and
the processing device determines a second conventional traveling path on the basis of the position range of the end point of the rotation path and the target pose point, wherein the target pose point is a pose point at which the rear axle center of the vehicle is located after the vehicle parks into the first parking space.

It will be noted that the first conventional traveling path is a path formed from the current pose point of the vehicle to the starting point of the rotation path. The rotation path is a path formed by the vehicle rotating from the starting point to the end point around the first rotation center with the rotation radius. The second conventional traveling path is a path formed from the end point of the rotation path to the target pose point.

In some embodiments, the processing device may determine a plurality of conventional traveling paths on the basis of the position range of the starting point of the rotation path, the information (e.g., position) of the current pose point, kinematic constraints, and non-holonomic dynamic constraints; and select a conventional traveling path with a minimum cost from the determined plurality of conventional traveling paths as the first conventional traveling path.

In some embodiments, the information of the current pose point of the vehicle includes a traveling direction (or forward direction) of the vehicle. In response to the traveling direction of the vehicle being that the front of the vehicle enters the parkable space first, the first rotation center is determined as a first front wheel of the vehicle on the basis of the parkable space for the vehicle, the size of the vehicle, and the traveling direction of the vehicle. In response to the traveling direction of the vehicle being that the rear of the vehicle enters the parkable space first, the first rotation center is determined as a first rear wheel of the vehicle on the basis of the parkable space for the vehicle, the size of the vehicle, and the traveling direction of the vehicle.

In one possible implementation, determining the target parking path of the vehicle includes:
the processing device determines a parkable space for the vehicle on the basis of the information of the obstacles around the first parking space;
one or more rotation positions in the parking space and the first rotation center of the vehicle at the one or more rotation positions are determined, and a rotation path formed by the vehicle rotating around the first rotation center at each rotation position of the one or more rotation positions at that rotation position is determined;
the processing device plans a first conventional traveling path on the basis of the information of the current pose point of the vehicle and a rotation position among the one or more rotation positions that is closest to the current pose point; and
a second conventional traveling path is planned on the basis of the position information of the first parking space and a rotation position among the one or more rotation positions that is closest to the position of the first parking space.

In some embodiments, determining the one or more rotation positions in the parkable space includes: the processing device determines at least one rotatable space in the parkable space on the basis of the size of the vehicle, and determines one rotation position in each rotatable space of the at least one rotatable space, wherein the parkable space represents a space that allows the vehicle to perform actions such as moving forward, moving backward, and rotating during parking without collision, and the rotatable space represents a space that allows the vehicle to perform a rotating action without collision.

In some embodiments, when one rotation position is determined, the target parking path includes the first conventional traveling path, the second conventional traveling path, and a rotation path formed by rotating at the first rotation position.

In some embodiments, when the rotation positions are plural, the conventional traveling path between the plurality of the rotation positions is planned. The target parking path includes conventional traveling paths and rotation paths, wherein the conventional traveling paths include the first conventional traveling path, the second conventional traveling path, and the conventional traveling path between the plurality of the rotation positions, and the rotation paths are plural, i.e., the rotation paths formed by rotating at the plurality of rotation positions.

In this way, the target parking path of the vehicle can be planned through various methods. Therefore, preliminary screening can be performed among the parking paths planned by the various corresponding methods on the basis of an evaluated pre-parking time. For example, a planning result with the shortest parking time is selected as the target parking path, which can effectively improve the efficiency and safety of automatic parking, thereby enhancing user experience.

For ease of understanding, several examples of the target parking path are exemplarily introduced below. It will be noted that in the following, Example 1 corresponds to a case where the front of the vehicle enters the parkable space first, and Example 2 corresponds to a case where the rear of the vehicle enters the parkable space first. For convenience of describing the technical solution, in Example 1, the first conventional traveling path is embodied as a third conventional traveling path, and the second conventional traveling path is embodied as a fourth conventional traveling path. Similarly, in Example 2, the first conventional traveling path is embodied as a fifth conventional traveling path, and the second conventional traveling path is embodied as a sixth conventional traveling path.

Example 1: When the first rotation center is the right front wheel of the vehicle, the current pose information of the vehicle includes the current pose point of the vehicle. The current pose point is a pose point at which the rear axle center of the vehicle is currently located (point P in FIG. 5). The target parking path includes a first pre-entry path, a first rotation path, and a first entry path. The first pre-entry path includes a third conventional traveling path. The third conventional traveling path is a path formed by the vehicle from the current pose point to a first entry preparation pose point (path PC in FIG. 5). The first entry preparation pose point is a pose point at which the rear axle center of the vehicle is located before rotation (point C in FIG. 5). The first rotation path is a path formed by the vehicle rotating from the first entry preparation pose point to a second entry preparation pose point around the first rotation center (the in-situ rotation point in FIG. 5, i.e., the right front wheel of the vehicle) (path CB in FIG. 5). The first entry path includes a third conventional traveling path. The third conventional traveling path is a path formed by the vehicle from the second entry preparation pose point to the target pose point (path BA in FIG. 5). The second entry preparation pose point is a pose point at which the rear axle center of the vehicle is located after rotation (point B in FIG. 5). The target pose point is a pose point at which the rear axle center of the vehicle is located after the vehicle parks into the first parking space (point A in FIG. 5).

For example, the processing device may acquire a forward direction of the vehicle and determine the first rotation center on the basis of the forward direction of the vehicle, the position information of the first parking space, and the surrounding environment information of the first parking space. For instance, the parking scenario in FIG. 5 is a dead-end road scenario where the front of the vehicle enters first. The processing device determines the first rotation center as the right front wheel of the vehicle. The processing device needs to plan the first pre-entry path, the first rotation path, and the first entry path to achieve reverse parking after rotating by a certain angle.

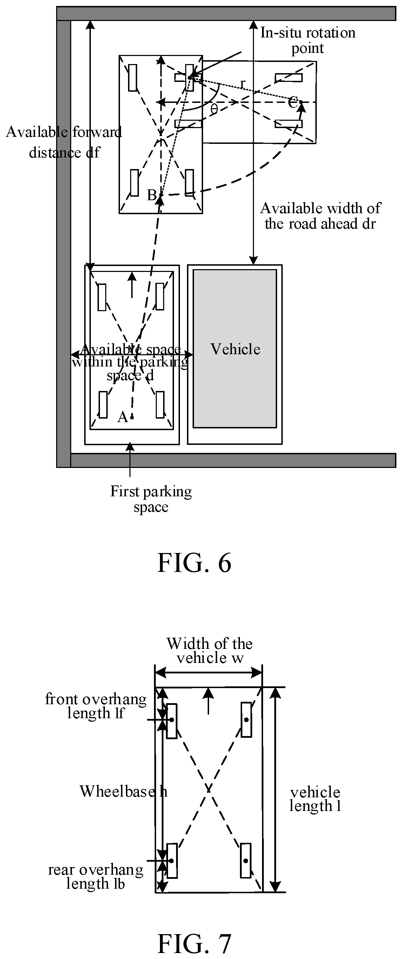

Reference is made to FIG. 6. FIG. 6 is a schematic diagram of a possible first rotation path provided by an embodiment of the present disclosure. Specifically, a position range of the second entry preparation pose point is related to the position information of the first parking space, the surrounding environment information of the first parking space, the size of the vehicle, and the position of the target pose point. For example, the processing device determines the position range of the second entry preparation pose point, i.e., the constraint range of point B in FIG. 6, on the basis of the position information of the first parking space, the surrounding environment information of the first parking space, the size of the vehicle, and the position of the target pose point (point A in FIG. 6).

For example, in terms of lateral constraint, as shown in FIG. 6, considering safety factors, the vehicle cannot adjust its pose towards the side where a wall exists. In terms of longitudinal height constraint, it is necessary to consider whether point B can meet the spatial requirements for in-situ steering. In some embodiments, the second entry preparation pose point B may be determined on the basis of the implementation described above. For instance, a Cartesian coordinate system is established with point A in FIG. 6 as the coordinate origin. The coordinate of point A is (*x*₀, *y*₀), and the coordinate of point B is (*x*₁, *y*₁). The position range of point B satisfies the following formula (1) and formula (2):
${x}_{0} < {x}_{1} < {x}_{0} + \frac{d - w}{2}$ ${y}_{0} + {l}_{wheelbase} + {l}_{f} + {d}_{f} - {d}_{r} + \frac{{l}_{b} ∗ l}{\sqrt{{w}^{2} + {l}^{2}}} + \frac{{w}^{2}}{2 \sqrt{{w}^{2} + {l}^{2}}} < {y}_{1} < {y}_{0} + {l}_{wheelbase} + {d}_{f}$

As shown in FIG. 6, *d* is the available space d within the parking space, *d_{f}* is the available forward distance, *dᵣ* is a width of the available road ahead. Reference is made to FIG. 7. FIG. 7 is a schematic diagram of a possible vehicle provided by an embodiment of the present disclosure. As shown in FIG. 7, *l_{wheelbase}* is the wheelbase, *l* is the vehicle length, *w* is the width of the vehicle, *l_{f}* is the front overhang length, and *l_{b}* is the rear overhang length.

Furthermore, the rotation radius of the first rotation path is related to the wheelbase and the width of the vehicle. For example, the processing device may determine the rotation radius of the first rotation path on the basis of the wheelbase and the width of the vehicle. For example, as shown in FIG. 6, the processing device determines the rotation radius *r* of the first rotation path using the following formula (3), where the definitions of the related parameters refer to the above:
$r = \sqrt{\frac{{w}^{2}}{4} + {{l}_{wheelbase}}^{2}}$

In some embodiments, the position range of the first entry preparation pose point is related to the position range of the second entry preparation pose point and the rotation radius of the first rotation path. For example, the processing device determines the position range of the first entry preparation pose point (i.e., the position range of point C in FIG. 6) on the basis of the position range of the second entry preparation pose point (i.e., the position range of point B in FIG. 6) and the rotation radius r of the first rotation path. For example, the coordinate of point B is (*x*₁, *y*₁), and the coordinate of point C is (*x*₂, *y*₂). As shown in FIG. 6, the position range of point C satisfies the following formula (4) and formula (5):
${x}_{2} = {x}_{1} + r sin θ$
${y}_{2} = {y}_{1} + r \left(1-cosθ\right)$

Among them, *θ* is the in-situ rotation angle of the vehicle around the right front wheel, and the rotation direction is clockwise. In some embodiments, *θ* is related to the size of the vehicle and the real-time attitude angle of the vehicle at point C. In some embodiments, *θ* may be a preset value. For example, to make the attitude angle of the vehicle at point B vertical and the attitude angle at point C horizontal, an angle value *θ* can be calculated on the basis of the vehicle size. This calculated angle can be used as the preset value for *θ*.

Furthermore, the processing device plans the first pre-entry path PC, i.e., the third conventional traveling path PC. Specifically, the processing device determines the third conventional traveling path PC on the basis of the position range of the first entry preparation pose point and the position of the current pose point.

In some embodiments, when planning the third conventional traveling path PC, the processing device may determine a plurality of conventional traveling paths on the basis of the position range of the first entry preparation pose point, the position of the current pose point, kinematic constraints, and non-holonomic dynamic constraints, and determine the third conventional traveling path on the basis of the plurality of conventional traveling paths. The third conventional traveling path is the conventional traveling path with the minimum cost among the plurality of conventional traveling paths. For example, the processing device may use a hybrid A* algorithm to perform path search from point P according to a vehicle kinematic model. Taking the current pose point P(*x*₄,*y*₄) as the starting point and the position range of the first entry preparation pose point as the search end point, there exist a plurality of conventional traveling paths satisfying vehicle kinematics and non-holonomic dynamic constraints. The processing device can select the conventional traveling path with the minimum cost among the plurality of the conventional traveling paths as the third conventional traveling path. The cost of each conventional traveling path among the plurality of the conventional traveling paths can be calculated using the following formula (6):
$cost = {k}_{1} \times s + {k}_{2} \times α + {k}_{3} \times β + {k}_{4} \times θ$

Among them, *s* is the trajectory path length, *α* is the gear shift count, β is the distance between the vehicle body and obstacles, and *θ* is the steering wheel angle change value. *k*₁*, k*₂*, k*₃ and *k*₄ are cost coefficients corresponding to each parameter. During calculation, by reasonably setting each cost coefficient, the cost value *cost* for each conventional traveling path among the plurality of the conventional traveling paths is calculated.

The processing device selects the conventional traveling path corresponding to the minimum cost value *cost* among the *cost* values *cost* of the plurality of the conventional traveling paths as the optimal path. In this way, the processing device acquires a conventional traveling path with fewer gear shifts, fewer steering wheel turns, the shortest path length, and keeping as far away from obstacles as possible, and plans this conventional traveling path as the third conventional traveling path PC.

In some embodiments, the position of the first entry preparation pose point is related to the end point of the third conventional traveling path. Thus, the processing device can acquire the position of the first entry preparation pose point (i.e., point C in FIG. 6) on the basis of the third conventional traveling path PC.

Furthermore, the processing device can determine the first rotation path on the basis of the first rotation center, the rotation radius of the first rotation path, and the position of the first entry preparation pose point. For example, in FIG. 6, on the basis of the position of the in-situ rotation point, the rotation radius r of the first rotation path, and the position of the first entry preparation pose point C, the first rotation path CB is determined. The position of the second entry preparation pose point is related to the end point of the first rotation path. Thus, the processing device can acquire the position of the second entry preparation pose point (i.e., point B in FIG. 6) on the basis of the first rotation path CB.

The processing device plans the first entry path BA, which is the path formed from the target pose point to the second entry preparation pose point. The first entry path BA satisfies vehicle kinematics and non-holonomic dynamic constraints.

In this way, the processing device performs planning using the order from inside to outside the parking space, and finally reverses the planning result to acquire the final target parking path. By dividing the target parking path planning into three stages: external space planning (the trajectory before in-situ turning in FIG. 5), in-situ turning point planning, and entry planning (the trajectory after in-situ turning in FIG. 5), and using different algorithms and vehicle motion models for trajectory planning, which can effectively improve the efficiency of automatic parking, thereby enhancing user experience.

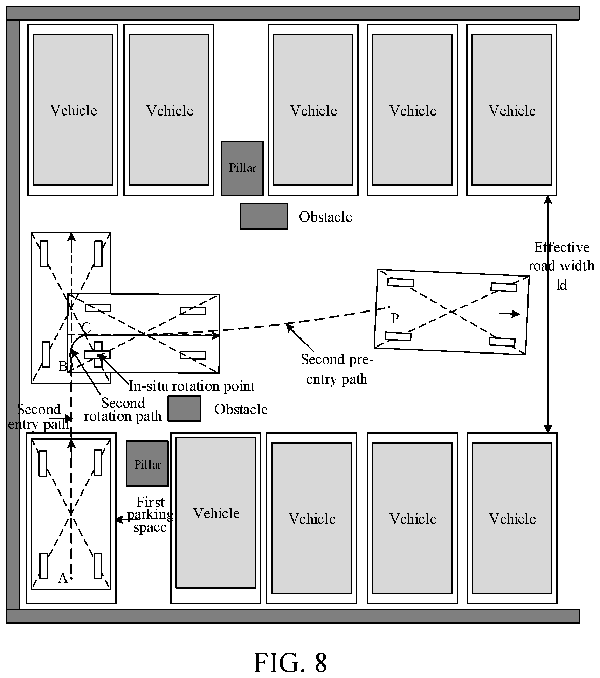

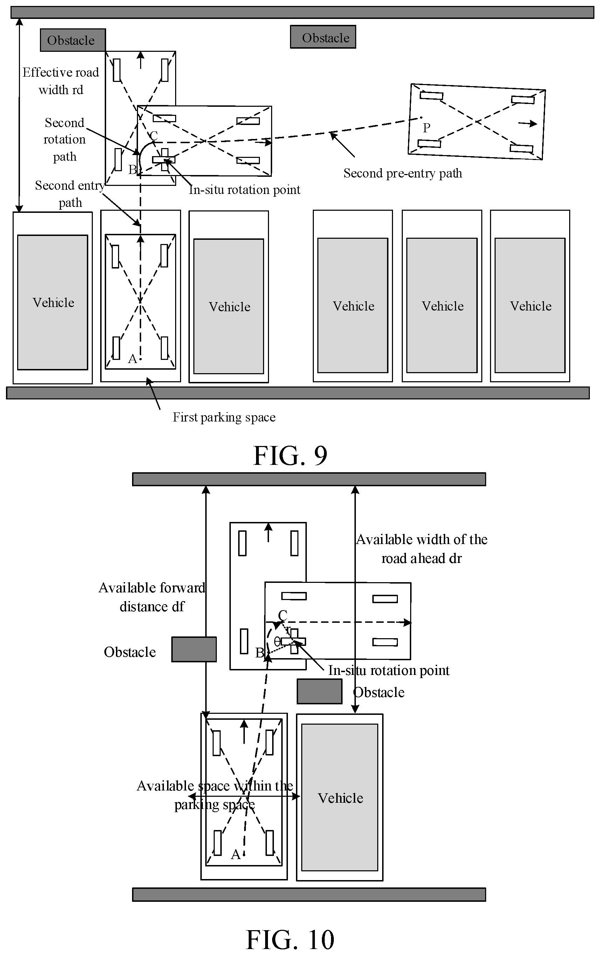

Example 2: Reference is made to FIG. 8. FIG. 8 is a schematic diagram of a possible target parking path provided by an embodiment of the present disclosure. Reference is made to FIG. 9. FIG. 9 is a schematic diagram of a possible target parking path provided by another embodiment of the present disclosure. When the first rotation center is a right rear wheel of the vehicle, the current pose information of the vehicle includes a current pose point of the vehicle. The current pose point is a pose point at which a rear axle center of the vehicle is currently located (point P in FIG. 8, or point P in FIG. 9). The target parking path includes a second pre-entry path, a second rotation path, and a second entry path. The second pre-entry path includes a fifth conventional traveling path. The fifth conventional traveling path is a path formed from the current pose point of the vehicle to a third entry preparation pose point (path PC in FIG. 8, or path PC in FIG. 9). The third entry preparation pose point is a pose point at which the rear axle center of the vehicle is located before rotation (point C in FIG. 8, or point C in FIG. 9). The second rotation path is a path formed by the vehicle rotating from the third entry preparation pose point to a fourth entry preparation pose point around the first rotation center (the in-situ rotation point in FIG. 8 or FIG. 9, i.e., the right rear wheel of the vehicle) (path CB in FIG. 8, or path CB in FIG. 9). The second entry path includes a sixth conventional traveling path. The sixth conventional traveling path is a path formed by the vehicle from the fourth entry preparation pose point to the target pose point (path BA in FIG. 8, or path BA in FIG. 9). The fourth entry preparation pose point is a pose point at which the rear axle center of the vehicle is located after rotation (point B in FIG. 8, or point B in FIG. 9). The target pose point is a pose point at which the rear axle center of the vehicle is located after the vehicle parks into the first parking space (point A in FIG. 8, or point A in FIG. 9).

For example, the processing device may acquire a forward direction of the vehicle and determine the first rotation center on the basis of the forward direction of the vehicle, the position information of the first parking space, and the surrounding environment information of the first parking space. For instance, the parking scenario in FIG. 8 is a dead-end road scenario where the rear of the vehicle enters first, and the parking scenario in FIG. 9 is a narrow passage scenario. The processing device determines the first rotation center for both these scenarios as the right rear wheel. The processing device needs to plan the second pre-entry path, the second rotation path, and the second entry path to achieve reverse parking after rotating by a certain angle.

Reference is made to FIG. 10. FIG. 10 is a schematic diagram of a possible second rotation path provided by an embodiment of the present disclosure. Specifically, a position range of the fourth entry preparation pose point is related to the position information of the first parking space, the surrounding environmental information of the first parking space, the size of the vehicle, and the position of the target pose point. For example, the processing device determines the position range of the fourth entry preparation pose point, i.e., the constraint range of point B in FIG. 10, on the basis of the position information of the first parking space, the surrounding environmental information of the first parking space, the size of the vehicle, and the position of the target pose point (point A in FIG. 10).

For example, as shown in FIG. 10, in terms of lateral constraint, the right side needs to consider collision constraints with obstacles, while the left side needs to consider the collision relationship between the left rear corner point of the vehicle and obstacles during the in-situ turning process. In terms of longitudinal height constraint, it is necessary to consider whether point B can meet the spatial requirements for in-situ steering. In some embodiments, the second entry preparation pose point B may be determined on the basis of the implementation described above. For instance, a Cartesian coordinate system is established with point A in FIG. 10 as the coordinate origin. The coordinate of point A is (*x*₀, *y*₀), and the coordinate of point B is (*x*₁, *y*₁). The position range of point B satisfies the following formula (7) and formula (8):
${x}_{0} - \frac{d}{2} + w + \sqrt{{w}^{2} + {{l}_{b}}^{2}} < {x}_{1} < {x}_{0} + \frac{d - w}{2}$ ${y}_{0} + {l}_{wheelbase} + {d}_{f} - {d}_{r} < {y}_{1} < {y}_{0} + {l}_{wheelbase} + {l}_{f} + {d}_{f} - \sqrt{{w}^{2} + {\left({l}_{f}+{l}_{wheelbase}\right)}^{2}}$

As shown in FIG. 10, *d* is the available space within the parking space, *d_{f}* is the available forward distance, *dᵣ* is the available road width ahead. As shown in FIG. 7, *l_{wheelbase}* is the wheelbase, *l* is the vehicle length, *w* is the vehicle width, *l_{f}* is the front overhang length, and *l_{b}* is the rear overhang length.

Furthermore, the rotation radius of the second rotation path is related to the width of the vehicle. For example, the processing device determines the rotation radius of the second rotation path on the basis of the width of the vehicle. For example, as shown in FIG. 10, the processing device determines the rotation radius *r* of the second rotation path using the following formula (9), where the definitions of the related parameters refer to the above:
$r = \frac{w}{2}$

It will be noted that, since in practical applications the distance between the two front wheels is the same as the width of the vehicle , the rotation radius *r* of the second rotation path can directly be set to half of the vehicle width here.

In some embodiments, the position range of the third entry preparation pose point is related to the position range of the fourth entry preparation pose point and the rotation radius of the second rotation path. For example, the processing device determines the position range of the third entry preparation pose point (i.e., the position range of point C in FIG. 10) on the basis of the position range of the fourth entry preparation pose point and the rotation radius of the second rotation path. For example, the coordinate of point B is (*x*₁, *y*₁), and the coordinate of point C is (*x*₂, *y*₂). As shown in FIG. 10, the position range of point C satisfies the following formula (10) and formula (11):
${x}_{2} = {x}_{1} + r \left(1-cosθ\right)$
${y}_{2} = {y}_{1} + r sin θ$

Among them, *θ* is the in-situ rotation angle of the vehicle around the right rear wheel, and the rotation direction is counterclockwise. In some embodiments, *θ* is related to the size of the vehicle and the real-time attitude angle of the vehicle at point C. In some embodiments, *θ* may be a preset value. For example, to make the attitude angle of the vehicle at point B vertical and the attitude angle at point C horizontal, an angle value *θ* can be calculated on the basis of the vehicle size. This calculated angle can be used as the preset value for *θ*.

Furthermore, the processing device plans the second pre-entry path PC, i.e., the fifth conventional traveling path PC. Specifically, the processing device determines the fifth conventional traveling path PC on the basis of the position range of the third entry preparation pose point and the position of the current pose point.

In some embodiments, when planning the fifth conventional traveling path PC, the processing device may determine a plurality of conventional traveling paths on the basis of the position range of the third entry preparation pose point, the position of the current pose point, kinematic constraints, and non-holonomic dynamic constraints, and determine the fifth conventional traveling path on the basis of the plurality of conventional traveling paths. The fifth conventional traveling path is the conventional traveling path with the minimum cost among the plurality of conventional traveling paths. For example, the processing device may use a hybrid A* algorithm to perform path search from point P according to a vehicle kinematic model. Taking the current pose point P(*x*₄,*y*₄) as the starting point and the position range of the third entry preparation pose point as the search end point, there exist a plurality of conventional traveling paths satisfying vehicle kinematics and non-holonomic dynamic constraints. The processing device can select the conventional traveling path with the minimum cost among the plurality of the conventional traveling paths as the fifth conventional traveling path PC. The cost of each conventional traveling path among the plurality of the conventional traveling paths can be calculated using the aforementioned formula (6).

The processing device selects the conventional traveling path corresponding to the minimum cost value among the cost values of the plurality of the conventional traveling paths as the optimal path. In this way, the processing device acquires a conventional traveling path with fewer gear shifts, fewer steering wheel turns, the shortest path length, and keeping as far away from obstacles as possible, and plans this conventional traveling path as the fifth conventional traveling path PC.

In some embodiments, the position of the third entry preparation pose point is related to the end point of the fifth conventional traveling path. Thus, the processing device can acquire the position of the third entry preparation pose point (i.e., point C in FIG. 10) on the basis of the fifth conventional traveling path PC.

Furthermore, the processing device can determine the second rotation path on the basis of the first rotation center, the rotation radius of the second rotation path, and the position of the third entry preparation pose point. For example, in FIG. 10, on the basis of the position of the in-situ rotation point, the rotation radius r of the second rotation path, and the position of the third entry preparation pose point C, the second rotation path CB is determined. The position of the fourth entry preparation pose point is related to the end point of the second rotation path. Thus, the processing device can acquire the position of the fourth entry preparation pose point (i.e., point B in FIG. 10) on the basis of the second rotation path CB.

The processing device plans the second entry path BA, which is the path formed from the target pose point to the fourth entry preparation pose point. The second entry path BA satisfies vehicle kinematics and non-holonomic dynamic constraints.

In this way, the processing device performs planning using the order from inside to outside the parking space, and finally reverses the planning result to acquire the final target parking path. By dividing the target parking path planning into three stages: external space planning (the trajectory before in-situ turning in FIG. 8 or FIG. 9), in-situ turning point planning, and entry planning (the trajectory after in-situ turning in FIG. 8 or FIG. 9), and using different algorithms and vehicle motion models for trajectory planning, which can effectively improve the efficiency of automatic parking, thereby enhancing user experience.

It will be noted that, due to the symmetry of left and right parking spaces, and for the purpose of standardized description, all scenarios have been normalized to right parking space scenarios (as shown in FIG. 5, FIG. 6, FIG. 8, or FIG. 9). For a left parking space scenario, only a mirroring process of the calculation results is needed.

S403: The processing device controls the vehicle to park on the basis of the target parking path.

In some embodiments, one motor may control motion of one or more wheels of the vehicle.

For example, one motor controls motion of one wheel. When the parking path of the vehicle includes the rotation path, each motor may control its corresponding wheel to rotate by a certain angle, enabling the vehicle to rotate by a certain angle around a point with a rotation radius, thereby executing the rotation path. This facilitates effective improvement in the efficiency and safety of automatic parking, as well as user experience, in scenarios such as narrow spaces.

In some embodiments, the processing device may also perform parking trajectory tracking with reference to the target parking path to execute the priority-specific parking trajectory. Simultaneously, obstacle collision detection is performed in real-time on the basis of the perceived vehicle state, enabling decisionmaking and avoidance in situations where there is a risk of collision with obstacles.

In the embodiment shown in FIG. 4, the processing device can acquire the position information of the first parking space and the surrounding environment information of the first parking space, and plan the target parking path of the vehicle on the basis of the position information of the first parking space and the surrounding environment information. Furthermore, the target parking path may include the rotation path, allowing the vehicle to rotate around the first rotation center. This enables the path planned by the processing device, compared to conventional path planning methods on the basis of Ackermann steering geometry, can achieve position adjustments with a turning radius nearly zero. In scenarios where adjustment methods like right-front-left-rear or left-front-right-rear cannot be realized, the vehicle's attitude angle can still be adjusted. This effectively improves the efficiency and safety of automatic parking and enhances user experience.

The present disclosure also provides a method for leaving a parking space. When a vehicle parked in the first parking space needs to leave it, the processing device may acquire information of a current pose point of the vehicle, departure position information, and surrounding environmental information of the first parking space; determine a target departure path of the vehicle on the basis of the information of the current pose point of the vehicle, the departure position information, and the surrounding environmental information of the first parking space; and control the vehicle to leave the first parking space on the basis of the target departure path. The target departure path includes a conventional traveling path and a rotation path. The conventional traveling path includes at least one of a straight-line traveling path or a curved traveling path. The rotation path is a path formed by the vehicle rotating around a first rotation center of the vehicle. The rotation of the vehicle is realized by a plurality of motors respectively controlling a plurality of wheels, and the first rotation center is located within a rotatable area formed by connecting centers of the plurality of wheels.

Specifically, the processing device may determine a parkable space of the vehicle on the basis of information of obstacles around the first parking space; determine one or more rotation positions in the parking space and the first rotation center of the vehicle at the one or more rotation positions; and determine a rotation path formed by the vehicle rotating around the first rotation center at each rotation position of the one or more rotation positions respectively. The processing device plans a fifth conventional traveling path on the basis of the information of the current pose point of the vehicle and a rotation position among the one or more rotation positions that is closest to the current pose point; and plans a sixth conventional traveling path on the basis of the departure position information and a rotation position among the one or more rotation positions that is closest to a departure position.

In some embodiments, determining the one or more rotation positions includes: the processing device determines at least one rotatable space in the parkable space on the basis of a size of the vehicle, and determines one rotation position in each rotatable space of the at least one rotatable space.

In some embodiments, when one rotation position is determined, the target departure path includes the fifth conventional traveling path, the sixth conventional traveling path, and a rotation path formed by rotating at the first rotation position.

In some embodiments, when the rotation positions are plural, the conventional traveling path between the plurality of rotation positions is planned. The target departure path includes conventional traveling paths and rotation paths, wherein the conventional traveling paths include the fifth conventional traveling path, the sixth conventional traveling path, and the conventional traveling path between the plurality of rotation positions, and the rotation paths are plural, i.e., rotation paths formed by rotating at the plurality of rotation positions.

For example, the departure position information may be a position in a driving lane. The current pose point of the vehicle may be the center of the first parking space. The rotation position closest to the center of the first parking space is selected to plan the fifth conventional traveling path, and the rotation position closest to a certain position in the driving lane is selected to plan the sixth conventional traveling path. The surrounding environment information of the first parking space is configured to indicate information of obstacles around the first parking space, and the rotation path satisfies that no obstacles are located within the range of the rotation path.

In some embodiments, if it is detected that the information of obstacles around the first parking space during departure path planning has not changed compared to during parking path planning, the processing device may interchange the start and end positions of the target parking path to acquire the target departure path. The "interchange of start and end positions" here means using the starting position of the target parking path as the ending position of the target departure path, and using the ending position of the target parking path as the starting position of the target departure path. In other words, the vehicle can directly leave the parking space by following the target parking path previously used for parking entry.

In some embodiments, if it is detected that the information of obstacles around the first parking space during departure path planning has changed compared to during parking path planning, the target departure path is determined by referring to the determination method for the target parking path described above, which is not repeated in the present disclosure.

In this way, on the basis of supporting conventional traveling paths, it enables the vehicle to achieve a rotation path of in-situ rotation around its center of mass, thereby greatly improving the vehicle's flexibility, trafficability, and mobility. It allows for better handling of narrow parking environments, facilitates users in leaving parking spaces, and enhances user experience.

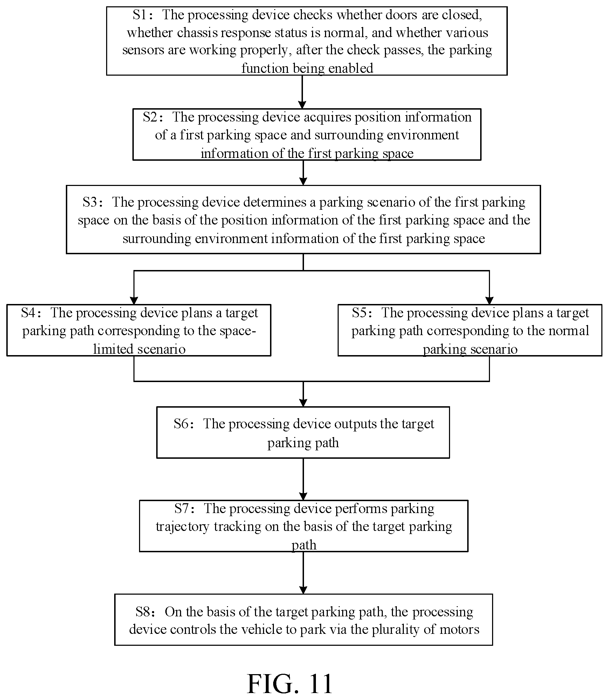

The embodiment shown in FIG. 4 above includes various possible solutions. For ease of understanding, one possible solution is introduced below. It will be understood that part of the terminology and logic in the solution shown in FIG. 11 can refer to the embodiment shown in FIG. 4.

Reference is made to FIG. 11. FIG. 11 is a schematic flowchart of a parking method provided by another embodiment of the present disclosure. The method includes operations:
S1: the processing device checks whether doors are closed, whether chassis response status is normal, and whether various sensors are working properly. After the check passes, the parking function is enabled.
S2: the processing device acquires position information of a first parking space and surrounding environmental information of the first parking space.

In some embodiments, the surrounding environmental information of parking spaces in a parking lot is configured to indicate information of obstacles around the parking spaces in the parking lot. For example, the surrounding environmental information of parking spaces in the parking lot may indicate how many parking spaces the parking lot contains, whether each parking space is occupied by a vehicle, what obstacles (e.g., stone pillars, wooden stakes, walls, etc.) exist in the parking lot, and position information of these obstacles in the parking lot. The position information of the first parking space and the position information of obstacles in the parking lot may be represented in forms such as a point, a line, or a bounding box. In some embodiments, the processing device may perceive the surrounding environment and identify surrounding obstacle information on the basis of visual sensors and ultrasonic sensors, and convert it into point obstacles, line obstacles, and polygon obstacles. The processing device may also acquire pose information of the vehicle.

S3: the processing device determines a parking scenario of the first parking space on the basis of the position information of the first parking space and the surrounding environmental information of the first parking space.

In some embodiments, the processing device filters out parkable spaces after acquiring parking space information of the parking lot, and displays the parkable spaces on an interface of an onboard device for user selection. The first parking space may be the target parking space selected by the user.

In some embodiments, the parking scenario may be a normal parking scenario or a space-limited scenario. For example, the processing device determines, on the basis of the position information of the first parking space and the surrounding environmental information of the first parking space, whether the parking scenario of the first parking space belongs to a space-limited scenario, wherein the space-limited scenario is a scenario where a space size is relatively small and movement of the vehicle is restricted. Space-limited scenarios include but are not limited to typical dead-end road scenarios and narrow passage scenarios.

If the parking scenario is a space-limited scenario, operation S4 is executed. If the parking scenario is a normal parking scenario, operation S5 is executed.

S4: the processing device plans a target parking path corresponding to the space-limited scenario.

In some embodiments, the processing device may plan the target parking path through one or more of the implementation methods described above. In some embodiments, the processing device may perform planning using the order from inside to outside the parking space, and finally reverse the planning result to acquire the final target parking path. The target parking path planning is divided into three stages: external space planning, in-situ turning point planning, and entry planning, using different algorithms and vehicle motion models for trajectory planning.

In some embodiments, if the parking scenario belongs to the space-limited scenario, the target parking path of the vehicle corresponding to the space-limited scenario is determined on the basis of the information of the current pose point of the vehicle, the position information of the first parking space, and the surrounding environmental information of the first parking space.

S5: the processing device plans a target parking path corresponding to the normal parking scenario.

In some embodiments, the processing device may plan a conventional traveling path as the target parking path.

S6: the processing device outputs the target parking path.

In some embodiments, for parking scenarios applicable to both four-motor parkable scenarios and normal parking scenarios, the processing device may perform target parking path planning for both, conduct preliminary screening on the basis of estimated pre-parking time, and preferentially select the planning result with the shortest parking time as the target parking path for output.

S7: the processing device performs parking trajectory tracking on the basis of the target parking path.

In some embodiments, the processing device executes the prioritized specific target parking path, while simultaneously performing real-time collision detection for obstacles on the basis of the perceived state, and makes decisions and avoids situations where there is a risk of collision with obstacles.

S8: on the basis of the target parking path, the processing device controls the vehicle to park via the plurality of motors.

In the embodiment shown in FIG. 11, when planning the parking path, the processing device selects an appropriate planning method to plan the target parking path on the basis of the parking scenario, making the planned target parking path more suitable for the actual application scenario of the vehicle, effectively improving the efficiency and safety of automatic parking, and enhancing user experience.

The methods of the embodiments of the present application have been elaborated above. The apparatus of the embodiments of the present application is provided below.

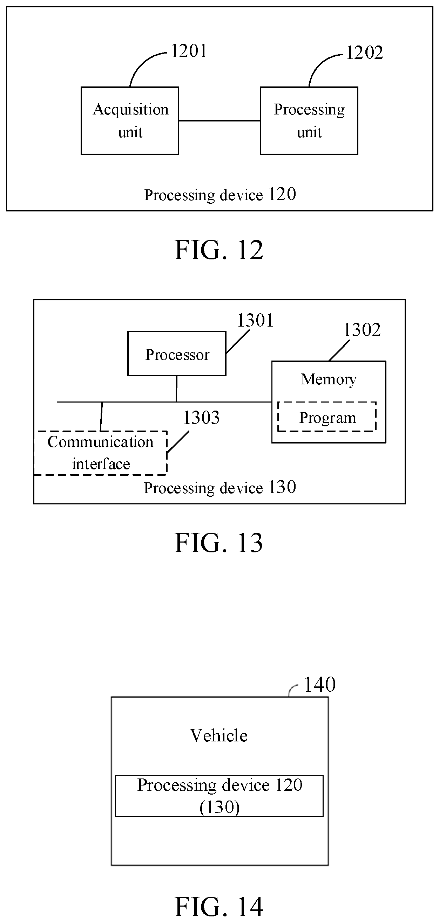

Reference is made to FIG. 12. FIG. 12 is a schematic structural diagram of a processing device provided by an embodiment of the present disclosure. The processing device 120 is included in a vehicle. The vehicle includes a plurality of wheels and a plurality of motors. Each wheel of the plurality of wheels is controlled by one motor of the plurality of motors. The processing device 120 may include an acquisition unit 1201 and a processing unit 1202. This processing device 120 is configured to implement the aforementioned parking method, for example, the parking method in the embodiment shown in FIG. 4 or FIG. 11.

It will be noted here that the division of the above-mentioned units is only a logical division on the basis of function, and does not serve as a limitation on the specific structure of the processing device 120. In specific implementations, some of the functional modules may be subdivided into more smaller functional modules, and some functional modules may also be combined into one functional module.

In a possible implementation, the acquisition unit 1201 is configured to acquire information of a current pose point of the vehicle, position information of a first parking space, and surrounding environmental information of the first parking space.

The processing unit 1202 is configured to:
determine a target parking path of the vehicle on the basis of the information of the current pose point of the vehicle, the position information of the first parking space, and the surrounding environmental information of the first parking space, the target parking path includes a conventional traveling path and a rotation path, the conventional traveling path includes a straight-line traveling path and/or a curved traveling path, the rotation path is a path formed by the vehicle rotating around a first rotation center of the vehicle, the rotation of the vehicle is realized by the plurality of motors respectively controlling the plurality of wheels, and the first rotation center is located within a rotatable area formed by connecting centers of the plurality of wheels; and
control the vehicle to park on the basis of the target parking path.

In a possible implementation, a turning radius of the vehicle corresponding to the curved traveling path is greater than or equal to a minimum turning radius of the vehicle, a turning radius of the vehicle corresponding to the rotation path is less than the minimum turning radius of the vehicle, and the minimum turning radius is a turning radius of the vehicle when steering control is performed with a maximum front wheel steering angle and the four wheels rotating in the same direction.

In a possible implementation, the surrounding environment information of the first parking space is configured to indicate information of obstacles around the first parking space, and the rotation path satisfies that no obstacles are located within a range of the rotation path.

In a possible implementation, the processing unit 1202 is further configured to:
determine a parkable space of the vehicle on the basis of the information of the obstacles around the first parking space; and
determine the first rotation center on the basis of the parkable space for the vehicle, a size of the vehicle, and the information of the current pose point of the vehicle.

In a possible implementation, the processing unit 1202 is further configured to:
determine a position range of an end point of the rotation path on the basis of the parkable space for the vehicle and the size of the vehicle, wherein the end point of the rotation path is a pose point at which a rear axle center of the vehicle is located after rotation;
determine a position range of a starting point of the rotation path on the basis of a rotation radius of the rotation path and the position range of the end point of the rotation path, wherein the rotation radius of the rotation path is related to the first rotation center and the size of the vehicle, and the starting point of the rotation path is a pose point at which the rear axle center of the vehicle is located before rotation;
determine a first conventional traveling path on the basis of the position range of the starting point of the rotation path and the current pose point of the vehicle, wherein the first conventional traveling path is a path formed from the current pose point of the vehicle to the starting point of the rotation path, and the current pose point of the vehicle is a pose point at which the rear axle center of the vehicle is currently located; and
determine the rotation path and a second conventional traveling path, the rotation path is a path formed by the vehicle rotating from the starting point to the end point around the first rotation center with the rotation radius, and the second conventional traveling path is a path formed from the end point of the rotation path to a target pose point, wherein the target pose point is a pose point at which the rear axle center of the vehicle is located after the vehicle parks into the first parking space.

In a possible implementation, the processing unit 1202 is further configured to:
determine a plurality of conventional traveling paths on the basis of the position range of the starting point of the rotation path, a position of the current pose point of the vehicle, kinematic constraints, and non-holonomic dynamic constraints; and
determine the first conventional traveling path, wherein the first conventional traveling path is a conventional traveling path with a minimum cost among the plurality of conventional traveling paths.

In a possible implementation, the processing unit 1202 is further configured to:
in response to a traveling direction of the vehicle being that the front of the vehicle enters the parkable space, determine the first rotation center as a first front wheel of the vehicle on the basis of the parkable space of the vehicle and the size of the vehicle; and
in response to the traveling direction of the vehicle being that the rear of the vehicle enters the parkable space, determine the first rotation center as a first rear wheel of the vehicle on the basis of the parkable space for the vehicle and the size of the vehicle. In a possible implementation, the first rotation center is a right front wheel of the vehicle,
the current pose point is a pose point at which the rear axle center of the vehicle is currently located,
the target parking path includes a first pre-entry path, a first rotation path, and a first entry path,
the first pre-entry path includes a third conventional traveling path, the third conventional traveling path is a path formed from the current pose point to a first entry preparation pose point, the first entry preparation pose point is a pose point at which the rear axle center of the vehicle is located before rotation,
the first rotation path is a path formed by the vehicle rotating around the right front wheel of the vehicle with a first rotation radius at the first entry preparation pose point, the first rotation radius is related to a wheelbase of the vehicle and a width of the vehicle; and
the first entry path includes a fourth conventional traveling path, the fourth conventional traveling path is a path formed from a second entry preparation pose point to the target pose point, the second entry preparation pose point is a pose point at which the rear axle center of the vehicle is located after rotation.

In a possible implementation, the first rotation center is a right rear wheel of the vehicle,
the current pose point is a pose point at which the rear axle center of the vehicle is currently located,
the target parking path includes a second pre-entry path, a second rotation path, and a second entry path,
the second pre-entry path includes a fifth conventional traveling path, the fifth conventional traveling path is a path formed from the current pose point to a third entry preparation pose point, the third entry preparation pose point is a pose point at which the rear axle center of the vehicle is located before rotation,
the second rotation path is a path formed by the vehicle rotating around the right rear wheel of the vehicle with a second rotation radius at the third entry preparation pose point, the second rotation radius is related to the width of the vehicle; and
the second entry path includes a sixth conventional traveling path, the sixth conventional traveling path is a path formed from a fourth entry preparation pose point to the target pose point, the fourth entry preparation pose point is a pose point at which the rear axle center of the vehicle is located after rotation.

In a possible implementation, the processing unit 1202 is further configured to:
determine a rotatable space in the parkable space on the basis of the size of the vehicle;
determine a plurality of rotation positions in the rotatable space and the first rotation center of the vehicle at the plurality of rotation positions, and determine a rotation path formed by the vehicle rotating around the first rotation center at the plurality of rotation positions respectively at each rotation position;
plan the first conventional traveling path on the basis of the information of the current pose point of the vehicle and a rotation position among the plurality of rotation positions that is closest to the current pose point;
plan a second conventional traveling path on the basis of a position of the first parking space and a rotation position among the plurality of rotation positions that is closest to the position of the first parking space; and
plan the conventional traveling path between the plurality of rotation positions.

It will be noted that the above-mentioned modules (acquisition unit 1201 and processing unit 1202) are used to perform operations related to the above method. For example, the acquisition unit 1201 is configured to perform the content related to operation S401, and the processing unit 1202 is configured to perform the content related to S402 to S403.

FIG. 13 is a schematic structural diagram of a processing device provided by other embodiments of the present disclosure. The processing device is a device with processing capability. The device here may be a physical device, such as a server (e.g., a rack server), a host, etc., or may be a virtual device, such as a virtual machine, a container, etc.

As shown in FIG. 13, the processing device 130 includes: a processor 1301 and a memory 1302, and may include one or more programs and possibly a communication interface 1303. It will be understood that the present disclosure does not limit the number of processors and memories in the processing device 130.

The processor 1301 is a module for performing operations, which may include a central processing unit (CPU), a graphics processing unit (GPU), a microprocessor (MP), a digital signal processor (DSP), a microcontroller unit (MCU), or one or more integrated circuits for controlling execution of programs for the above solution.

The memory 1302 is configure to provide storage space, where application data, user data, an operating system, computer programs, etc., may be optionally stored. The memory 1302 may include a read-only memory (ROM) or other types of static storage devices capable of storing static information and instructions, a random access memory (RAM) or other types of dynamic storage devices capable of storing information and instructions, and may also be an electrically erasable programmable read-only memory (EEPROM), a compact disc read-only memory (CD-ROM) or other optical disc storage, optical disc storage (including compact discs, laser discs, optical discs, digital versatile discs, Blu-ray discs, etc.), magnetic disk storage media or other magnetic storage devices, or any other medium capable of carrying or storing desired program code in the form of instructions or data structures and accessible by a computer, but is not limited thereto.

The memory 1302 may exist independently and be connected to the processor 1301 via a bus. The memory 1302 may also be integrated with the processor 1301.

The communication interface 1303 is used to provide information input or output for the at least one processor. And/or, the communication interface 1303 may be used to receive data sent externally and/or send data externally. The communication interface 1303 may be a wired link interface including such as an Ethernet cable, etc., or may be a wireless link interface (Wi-Fi, Bluetooth, General Wireless Transmission, and other wireless communication technologies, etc.). In some embodiments, the communication interface 1303 may also include a transmitter (e.g., a radio frequency transmitter, an antenna, etc.) or a receiver, etc., coupled to the interface.

In the embodiments of the present disclosure, the one or more programs mentioned above are stored in the memory 1302 in the form of program code and are configured to be executed by the processor 1301. The programs include instructions for implementing the operations in the aforementioned parking method, for example, the parking method shown in FIG. 4 or FIG. 11. That is, the memory 1302 stores executable instructions, and the processor 1301 executes the executable instructions to implement the aforementioned parking method, for example, the parking method in the embodiment of FIG. 4. In other words, the memory 1302 stores instructions for executing the parking method.

Alternatively, the memory 1302 stores executable instructions, and the processor 1301 executes the executable instructions to respectively implement the functions of one or more of the aforementioned acquisition unit and processing unit (or device), thereby implementing the parking method.

An embodiment of the present disclosure further provides a vehicle. As shown in FIG. 14, the vehicle 140 includes the processing device 120 or the processing device 130. In some embodiments, the vehicle 140 further includes a plurality of wheels and a plurality of motors. Each wheel of the plurality of wheels is controlled by one motor of the plurality of motors. The vehicle is configured to implement the aforementioned parking method, for example, the parking method in the embodiment of FIG. 4 or FIG. 11.

An embodiment of the present disclosure further provides a computer program product containing instructions. The computer program product may be software or a program product containing instructions that can run on a computing device or be stored in any available medium. The computer program instructions are configured to implement the aforementioned parking method, for example, the parking method in the embodiment of FIG. 4 or FIG. 11.

An embodiment of the present disclosure further provides a computer-readable storage medium. The computer-readable storage medium includes instructions for implementing the aforementioned parking method, for example, the parking method in the embodiment of FIG. 4 or FIG. 11.

The computer-readable storage medium may be any available medium that the processing device can store, or a data storage device such as a data center containing one or more available media. The available medium may be a magnetic medium (e.g., a floppy disk, a hard disk, a magnetic tape), an optical medium (e.g., a DVD), or a semiconductor medium (e.g., a solid-state drive), etc.

In the embodiments of the present disclosure, terms such as "exemplary" or "for example" are used to indicate an example, illustration, or explanation. Any embodiment or design solution described as "exemplary" or "for example" in the present disclosure will not be interpreted as being more preferred or advantageous than other embodiments or design solutions. Rather, using terms such as "exemplary" or "for example" is intended to present related concepts in a specific manner.

In the embodiments of the present disclosure, "at least one" refers to one or more, and "a plurality" refers to two or more. "At least one of the following" or similar expressions refer to any combination of these items, including any combination of a single item or plural items. For example, at least one of a, b, or c may represent: a, b, c, (a and b), (a and c), (b and c), or (a, b, and c), where a, b, and c can be single or multiple. "And/or" describes the association relationship of associated objects, indicating that three relationships may exist. For example, A and/or B may indicate: A exists alone, A and B exist simultaneously, or B exists alone, where A and B can be singular or plural. The character "/" generally indicates that the associated objects before and after it are in an "or" relationship.

Furthermore, unless stated otherwise, the use of ordinal numbers such as "first" and "second" in the embodiments of the present disclosure is to distinguish between a plurality of objects, and is not intended to limit the order, sequence, priority, or importance of the plurality of the objects. For example, a first entry path and a second entry path are merely for ease of description and do not indicate differences in deployment order, importance, etc., between these two entry paths.

Those of ordinary skill in the art will understand that all or part of the operations for implementing the above embodiments can be completed by hardware, or by instructing related hardware through a program. The program can be stored in a computer-readable storage medium. The storage medium mentioned above can be a read-only memory, a magnetic disk, an optical disc, etc.

Finally, it will be noted that: the above embodiments are only used to illustrate the technical solutions of the present disclosure and are not intended to limit them; although the present disclosure has been described in detail with reference to the foregoing embodiments, those of ordinary skill in the art will understand that they can still modify the technical solutions recorded in the foregoing embodiments or make equivalent replacements to some of the technical features; and such modifications or replacements do not cause the essence of the corresponding technical solutions to depart from the scope of the technical solutions of the embodiments of the present disclosure.

## Claims

1. A parking method, the method being configured to control a vehicle to park, the vehicle comprising a plurality of wheels and a plurality of motors, each wheel of the plurality of wheels being controlled by one motor of the plurality of motors, the method comprising:
acquiring information of a current pose point of the vehicle, position information of a first parking space, and surrounding environmental information of the first parking space;
determining (S402) a target parking path of the vehicle on the basis of the information of the current pose point of the vehicle, the position information of the first parking space, and the surrounding environmental information of the first parking space, wherein the target parking path comprises a conventional traveling path and a rotation path, the conventional traveling path comprising at least one of a straight-line traveling path or a curved traveling path, the rotation path being a path formed by the vehicle rotating around a first rotation center of the vehicle, the rotation of the vehicle being realized by the plurality of motors respectively controlling the plurality of wheels, and the first rotation center being located within a rotatable area formed by connecting centers of the plurality of wheels; and
controlling (S403) the vehicle to park on the basis of the target parking path.

2. The parking method according to claim 1, wherein a turning radius of the vehicle corresponding to the curved traveling path is greater than or equal to a minimum turning radius of the vehicle, a turning radius of the vehicle corresponding to the rotation path is less than the minimum turning radius of the vehicle, and the minimum turning radius is a turning radius of the vehicle when steering control is performed with a maximum front wheel steering angle and the plurality of wheels rotating in the same direction.

3. The parking method according to claim 1, wherein the surrounding environmental information of the first parking space is configured to indicate information of obstacles around the first parking space, and the rotation path satisfies that no obstacles are located within the range of the rotation path.

4. The parking method according to claim 3, wherein the parking method further comprises:
determining a parkable space for the vehicle on the basis of the information of the obstacles around the first parking space; and
determining the first rotation center on the basis of the parkable space of the vehicle, a size of the vehicle, and the information of the current pose point of the vehicle.

5. The parking method according to claim 4, wherein the parking method further comprises:
determining a position range of an end point of the rotation path on the basis of the parkable space of the vehicle and the size of the vehicle, wherein the end point of the rotation path is a pose point at which a rear axle center of the vehicle is located after rotation;
determining a position range of a starting point of the rotation path on the basis of a rotation radius of the rotation path and the position range of the end point of the rotation path, wherein the rotation radius of the rotation path is related to the first rotation center and the size of the vehicle, and the starting point of the rotation path is a pose point at which the rear axle center of the vehicle is located before rotation;
determining a first conventional traveling path on the basis of the position range of the starting point of the rotation path and the information of the current pose point of the vehicle, wherein the first conventional traveling path is a path formed from the current pose point of the vehicle to the starting point of the rotation path, and the current pose point of the vehicle is a pose point at which the rear axle center of the vehicle is currently located; and
determining the rotation path and a second conventional traveling path, wherein the rotation path is a path formed by the vehicle rotating from the starting point to the end point around the first rotation center with the rotation radius, the second conventional traveling path is a path formed from the end point of the rotation path to a target pose point, and the target pose point is a pose point at which the rear axle center of the vehicle is located after the vehicle parks into the first parking space.

6. The parking method according to claim 5, wherein determining the first conventional traveling path on the basis of the position range of the starting point of the rotation path and the information of the current pose point of the vehicle comprises:
determining a plurality of conventional traveling paths on the basis of the position range of the starting point of the rotation path, a position of the current pose point of the vehicle, kinematic constraints, and non-holonomic dynamic constraints; and
determining a conventional traveling path with a minimum cost among the plurality of conventional traveling paths as the first conventional traveling path.

7. The parking method according to claim 4, wherein the information of the current pose point of the vehicle comprises a traveling direction of the vehicle, and the parking method further comprises:
in response to the traveling direction of the vehicle being that the front of the vehicle enters the parkable space first, determining the first rotation center as a first front wheel of the vehicle on the basis of the parkable space for the vehicle and the size of the vehicle; or
in response to the traveling direction of the vehicle being that the rear of the vehicle enters the parkable space first, determining the first rotation center as a first rear wheel of the vehicle on the basis of the parkable space for the vehicle and the size of the vehicle.

8. The parking method according to claim 7, wherein the first rotation center is a right front wheel of the vehicle;
the target parking path comprises a first pre-entry path, a first rotation path, and a first entry path;
the first pre-entry path comprising a third conventional traveling path, the third conventional traveling path being a path formed from the current pose point to a first entry preparation pose point, the first entry preparation pose point being a pose point at which the rear axle center of the vehicle is located before rotation;
the first rotation path being a path formed by the vehicle rotating around the right front wheel of the vehicle with a first rotation radius at the first entry preparation pose point, the first rotation radius being related to a wheelbase of the vehicle and a width of the vehicle; and
the first entry path comprising a fourth conventional traveling path, the fourth conventional traveling path being a path formed from a second entry preparation pose point to the target pose point, the second entry preparation pose point being a pose point at which the rear axle center of the vehicle is located after rotation of the vehicle.

9. The parking method according to claim 7, wherein the first rotation center is a right rear wheel of the vehicle;
the target parking path comprises a second pre-entry path, a second rotation path, and a second entry path;
the second pre-entry path comprising a fifth conventional traveling path, the fifth conventional traveling path being a path formed from the current pose point to a third entry preparation pose point, the third entry preparation pose point being a pose point at which the rear axle center of the vehicle is located before rotation;
the second rotation path being a path formed by the vehicle rotating around the right rear wheel of the vehicle with a second rotation radius at the third entry preparation pose point, the second rotation radius being related to the width of the vehicle; and
the second entry path comprising a sixth conventional traveling path, the sixth conventional traveling path being a path formed from a fourth entry preparation pose point to the target pose point, the fourth entry preparation pose point being a pose point at which the rear axle center of the vehicle is located after rotation.

10. The parking method according to claim 4 or 5, wherein the parking method further comprises:
determining at least one rotatable space in the parkable space on the basis of the size of the vehicle;
determining a rotation position and the first rotation center of the vehicle at the rotation position, for each rotatable space in the at least one rotatable space and determining a rotation path formed by the vehicle rotating around the first rotation center at the rotation position respectively at each rotation position;
planning the first conventional traveling path on the basis of the information of the current pose point of the vehicle and a rotation position among the plurality of rotation positions that is closest to the current pose point;
planning the second conventional traveling path on the basis of a position of the first parking space and a rotation position among the plurality of rotation positions that is closest to the position of the first parking space; and
planning the conventional traveling path between the plurality of rotation positions.

11. The parking method according to claim 1, wherein the parking method further comprises:
determining, on the basis of the position information of the first parking space and the surrounding environmental information of the first parking space, whether a parking scenario of the first parking space belongs to a space-limited scenario, wherein the space-limited scenario is a scenario where a space size is relatively small and movement of the vehicle is restricted.

12. The parking method according to claim 11, wherein determining the target parking path of the vehicle on the basis of the information of the current pose point of the vehicle, the position information of the first parking space, and the surrounding environmental information of the first parking space comprises:
if the parking scenario belongs to the space-limited scenario, determining the target parking path of the vehicle corresponding to the space-limited scenario on the basis of the information of the current pose point of the vehicle, the position information of the first parking space, and the surrounding environmental information of the first parking space.

13. A method for leaving a parking space, the method being configured to control a vehicle to leave a parking space, the vehicle comprising a plurality of wheels and a plurality of motors, each wheel of the plurality of wheels being controlled by one motor of the plurality of motors, the method comprising:
acquiring information of a current pose point of the vehicle, departure position information, and surrounding environmental information of a first parking space;
determining a target departure path of the vehicle on the basis of the information of the current pose point of the vehicle, the departure position information, and the surrounding environmental information of the first parking space, wherein the target departure path comprises a conventional traveling path and a rotation path, the conventional traveling path comprising at least one of a straight-line traveling path or a curved traveling path, the rotation path being a path formed by the vehicle rotating around a first rotation center of the vehicle, the rotation of the vehicle being realized by the plurality of motors respectively controlling the plurality of wheels, and the first rotation center being located within a rotatable area formed by connecting centers of the plurality of wheels; and
controlling the vehicle to leave the first parking space on the basis of the target departure path.

14. The method for leaving the parking space according to claim 13, wherein a turning radius of the vehicle corresponding to the curved traveling path is greater than or equal to a minimum turning radius of the vehicle, a turning radius of the vehicle corresponding to the rotation path is less than the minimum turning radius of the vehicle, and the minimum turning radius is a turning radius of the vehicle when steering control is performed with a maximum front wheel steering angle and the plurality of wheels rotating in the same direction.

15. The method for leaving the parking space according to claim 13, wherein the surrounding environment information of the first parking space is configured to indicate information of obstacles around the first parking space; the rotation path satisfies that no obstacles are located within the range of the rotation path; and the method for leaving the parking space further comprises:
determining a parkable space of the vehicle on the basis of the information of the obstacles around the first parking space;
determining at least one rotatable space in the parkable space on the basis of a size of the vehicle;
determining one or more rotation positions in the at least one rotatable space and the first rotation center of the vehicle at the one or more rotation positions, and determining a rotation path formed by the vehicle rotating around the first rotation center at the one or more rotation positions respectively at the one or more rotation positions;
planning a seventh conventional traveling path on the basis of the information of the current pose point of the vehicle and a rotation position among the one or more rotation positions that is closest to the current pose point;
planning an eighth conventional traveling path on the basis of the departure position information and a rotation position among the one or more rotation positions that is closest to a departure position; and
in response to the rotation positions being plural, planning the conventional traveling path between the plurality of rotation positions.

16. A processing device (120), the processing device being disposed on a vehicle, the vehicle comprising a plurality of wheels and a plurality of motors, each wheel of the plurality of wheels being controlled by one motor of the plurality of motors, the processing device comprising an acquisition unit (1201) and a processing unit (1202);
the acquisition unit being configured to acquire information of a current pose point of the vehicle, position information of a first parking space, and surrounding environmental information of the first parking space; and
the processing unit being configured to:
determine a target parking path of the vehicle on the basis of the information of the current pose point of the vehicle, the position information of the first parking space, and the surrounding environmental information of the first parking space, wherein the target parking path comprises a conventional traveling path and a rotation path, the conventional traveling path comprising at least one of a straight-line traveling path or a curved traveling path, the rotation path being a path formed by the vehicle rotating around a first rotation center of the vehicle, the rotation of the vehicle being realized by the plurality of motors respectively controlling the plurality of wheels, and the first rotation center being located within a rotatable area formed by connecting centers of the plurality of wheels; and
control the vehicle to park on the basis of the target parking path.

17. A processing device (130), the processing device being disposed on a vehicle, the vehicle comprising a plurality of wheels and a plurality of motors, each wheel of the plurality of wheels being controlled by one motor of the plurality of motors, the processing device comprising a processor (1301) and a memory (1302), the memory storing a program, the program comprising instructions for performing the operations in the method according to any one of claims 1 to 15.

18. A vehicle, the vehicle comprising a plurality of wheels, a plurality of motors, and the processing device (120) according to claim 16 or the processing device (130) according to claim 17; each wheel of the plurality of wheels being controlled by one motor of the plurality of motors; the processing device being electrically coupled to the plurality of motors; the processing device being configured to implement the method according to any one of claims 1 to 15.

19. A computer-readable storage medium, the computer-readable storage medium storing a computer program, the computer program comprising instructions for performing the operations in the method according to any one of claims 1 to 15.
